# EUROPÄISCHE PATENTSCHRIFT

(11) **EP 3 287 298 B1**
(45) Veröffentlichungstag und Bekanntmachung des Hinweises auf die Patenterteilung: **08.07.2020**
(21) Anmeldenummer: 17186064.6
(22) Anmeldetag: 11.08.2017
(51) Int. Cl.: B60B 27/02, B60B 27/04, F16C 19/02

(54) **NABE UND NABENSERIE**
HUB AND HUB SERIES
MOYEU ET SÉRIE DE MOYEUX

(30) Priorität: 22.08.2016 DE 102016115515
(43) Veröffentlichungstag der Anmeldung: 28.02.2018
(73) Patentinhaber: DT Swiss AG, 2504 Biel (CH)
(72) Erfinder: Walthert, Martin, CH-3270 Aarberg (CH); Spahr, Stefan, CH-2543 Lengnau (CH)
(74) Vertreter: BSB Patentanwälte Schütte & Engelen Partnerschaft mbB

(56) Entgegenhaltungen:
- EP-A2- 1 840 412
- WO-A1-2011/051759
- WO-A2-2009/109162
- DE-A1- 19 856 626
- JP-A- 2006 153 073
- US-A1- 2010 316 323

## Beschreibung

Die vorliegende Erfindung betrifft eine Nabe sowie eine Nabenserie mit wenigstens zwei unterschiedlichen Nabentypen für wenigstens teilweise muskelbetriebene Fahrräder.

Im sportlichen Bereich sowie auch im Wettkampfbereich werden in der Regel besonders leichte und zugleich sehr belastbare Fahrradkomponenten gefordert. Eine besondere Bedeutung kommt dabei den Laufrädern zu, da sich hier eine Gewichtsoptimierung aufgrund der rotierenden Bauteile besonders deutlich auswirkt. Hochwertige Laufräder bestehen daher häufig aus besonders leichten und zugleich belastbaren Naben und Felgen sowie Speichen. Die Gewichtsreduzierung bei Naben erfolgt häufig durch die Verwendung von Leichtbauwerkstoffen für das Nabengehäuse und die Achse. Häufig wird die Achse auch hohl ausgeführt.

Allerdings weisen die in Naben üblicherweise eingesetzten Wälzlager ein recht hohes Gewicht auf. Zudem sind oft mehrere solcher Lager in einer Nabe verbaut. Bei einer Hinterradnabe können beispielsweise vier Wälzlager vorgesehen sein. Somit wird das Gesamtgewicht einer Nabe stark durch das Gewicht der eingesetzten Lager bestimmt. Besonders entscheidend ist dies bei Hochleistungsnaben, da die Lager hier einen besonders großen Anteil an dem Gesamtgewicht haben.

Die Naben dürfen sich im Betrieb nicht durchbiegen. Deshalb und aufgrund der dauerhaften Belastung werden bei Fahrradnaben häufig Wälzlager eingesetzt, bei denen sowohl die Lagerschalen als auch die Wälzkörper aus Stahl gefertigt sind. Solche Lager weisen daher ein entsprechend hohes Gewicht auf. Diese Komponenten weisen aber die erforderliche Stabilität auf. Im Stand der Technik und beispielsweise im Motorsport sind auch gewichtsoptimierte Wälzlager bekannt geworden, welche vollständig oder teilweise aus einem Keramikwerkstoff gefertigt sind.

Nachteilig ist allerdings, dass solche Wälzlager sehr kostenintensive Bauteile darstellen. Zudem ist die Betriebsfestigkeit solcher Wälzlager häufig eingeschränkt, sodass sie öfter ausgetauscht werden müssen. Deshalb eignen sich solche Komponenten nicht für den Masseneinsatz.

Aus WO 2011/051759 A1 ist eine Nabe für Fahrräder bekannt. Es ist daher die Aufgabe der vorliegenden Erfindung, eine gewichtsoptimierte Nabe zur Verfügung zu stellen, welche zugleich auch besonders wirtschaftlich herstellbar ist und welche insbesondere keine Einschränkungen bezüglich der Betriebsfestigkeit mit sich bringt bzw. den Wartungsaufwand nicht erhöht.

Diese Aufgabe wird gelöst durch eine Nabe mit den Merkmalen des Anspruchs 1 und durch eine Nabenserie mit den Merkmalen des Anspruchs 13. Bevorzugte Weiterbildungen der Erfindung sind Gegenstand der Unteransprüche. Weitere Vorteile und Merkmale der vorliegenden Erfindung ergeben sich aus der Beschreibung der Ausführungsbeispiele.

Die erfindungsgemäße Nabe ist für wenigstens teilweise muskelbetriebene Fahrräder vorgesehen. Die Nabe umfasst ein Nabengehäuse und wenigstens eine Lagereinheit zur drehbaren Lagerung des Nabengehäuses gegenüber einer Achse. Die Lagereinheit umfasst wenigstens zwei Lagerringe. Die Lagerringe umfassen jeweils wenigstens eine Aufnahmefläche und jeweils wenigstens eine Lauffläche. Ein Lagerring, insbesondere ein Außenring, ist mit seiner Aufnahmefläche zu wenigstens einem Lagersitz des Nabengehäuses ausgerichtet. Ein Lagerring, insbesondere ein Innenring, ist mit seiner Aufnahmefläche zu Achse ausgerichtet. Zwischen den Laufflächen der Lagerringe sind auf diesen abwälzende Wälzkörper angeordnet. Dabei weist wenigstens ein Lagerring wenigstens eine Aussparung insbesondere zur Gewichtsreduktion an seiner Aufnahmefläche auf. Eine erste Lösung besteht darin, dass die Aussparung axial beabstandet von einer (axialen) Mitte der Lauffläche angeordnet ist. Gemäß einer zweiten Lösung kann die Aussparung auch den Bereich der Mitte der Lauffläche umfassen. Wenigstens im Bereich der Lauffläche ist in der Aussparung wenigstens ein Ausgleichselement angeordnet, welches die ausgesparte Aufnahmefläche des Lagerrings passend gegenüber dem Lagersitz und/oder der Achse ergänzt, wobei das Ausgleichselement aus einem so harten Material wie das Material des Lagerrings besteht. In beiden Ausgestaltungen ist durch die Aussparung der Lagerring im Bereich der Aussparung (radial bzw. in radialer Richtung) beabstandet gegenüber dem Lagersitz und/oder der Achse angeordnet, sodass eine Gewichtsreduktion des Lagerrings bei im Wesentlichen gleichen und insbesondere gleichen Passmaßen der Lagereinheit erreicht wird.

Die erfindungsgemäße Nabe bietet viele Vorteile. Ein erheblicher Vorteil ist, dass die Nabe besonders leicht ist und ein erheblich geringeres Gewicht als Naben mit üblichen Lagereinheiten aufweist. Zudem ist die Nabe besonders kostengünstig herstellbar. Dabei bringt dieser Leichtbau keine Nachteile bezüglich der Betriebsfestigkeit mit sich. Die Gewichtsoptimierung kann durch eine konstruktiv unaufwendige und zugleich passgenaue Ausgestaltung der Lagereinheiten mit Aussparungen erreicht werden. Dadurch, dass in der Mitte der Lauffläche keine Aussparung in der dem Lagerring ausgebildet ist, steht durch zur Abstützung des Lagers die volle Wandstärke des Lagerrings zur Verfügung. Naben von Fahrrädern sind extremen Belastungen ausgesetzt. Das auf einen Freilauf einer Hinterradnabe wirkende Drehmoment kann 400 Nm erreichen. Derartig hohe Drehmomente können auch bei sehr stark motorisierten Kraftfahrzeugen auftreten. Bei diesen sind die Abmessungen der belasteten Bauteile aber viel größer, sodass die Belastungen bei einer Fahrradnabe örtlich noch größer sein können als bei Sportwagen. Außerdem wirken auch andere Belastungen bei beispielsweise einer Kurvenfahrt auf die Nabe und die Lagereinheiten ein. Insgesamt muss bei Fahrradnaben für den sportlichen und professionellen Bereich sichergestellt werden, dass auch bei hohen Belastungen keine unzulässigen Durchbiegungen auftreten. Das wird auch dadurch gewährleistet, dass im zentralen Bereich der Lauffläche vorzugsweise keine leere oder hohle Aussparung ausgebildet ist, die zu einer unzureichenden Abstützung der Lagereinheit führen könnte. Dort in der axialen Mitte der Lauffläche oder in der Flucht der Wälzkörper ist die volle Wandstärke vorhanden. Die volle Wandstärke kann durch den Lagerring selbst zur Verfügung gestellt werden oder die volle Wandstärke wird durch ein Ausgleichselement realisiert, welches wenigstens im mittleren Bereich oder in der Mitte der Lauffläche aus einem so harten Material besteht wie das Material des Lagerringes. Dadurch wird sichergestellt, dass dort keine Durchbiegung auftritt, auch wenn hohe und höchste Belastungen auftreten. Beispielsweise kann ein Ring aus Keramikmaterial oder dergleichen eingesetzt werden. Ein Keramikring ist ausreichend hart und kommt so nicht in Kontakt mit den Wälzkörpern, sodass eine hohe Lebensdauer und ein geringer Verschleiß bei geringem Gewicht möglich ist.

Vorzugsweise weist wenigstens eine Lagereinheit kugelförmig ausgebildete Wälzkörper auf.

Vorzugsweise ist die oder wenigstens eine in einem Lagerring ausgebildete Aussparung axial vollständig außerhalb der Lauffläche des Lagerrings angeordnet. Das bedeutet, dass sich diese Aussparung in axialer Richtung nicht innerhalb der Ebenen befindet, die durch die Ränder der Führungsrille gebildet werden, die vorzugsweise in der Lauffläche ausgebildet sind.

Vorzugsweise erstreckt sich die Aussparung über wenigstens 1/10 und insbesondere wenigstens 1/8 und vorzugsweise wenigstens 1/6 oder 1/5 einer (axialen) Breite des Lagerrings. Es können auch zwei oder mehr Aussparungen in einem Lagerring vorgesehen sein. Insbesondere ist jeweils wenigstens eine Aussparung auf jeder axialen Seite des Lagerrings vorgesehen.

Vorzugsweise beträgt eine Summe aller Flächen aller Aussparungen in einem Lagerring wenigstens ein 1/10 und insbesondere wenigstens 1/8 und vorzugsweise wenigstens 1/5 oder 1/4 oder sogar 1/3 einer Querschnittsfläche des (restlichen bzw. verbleibenden) Lagerrings.

Insbesondere ist in oder an der axialen Mitte der Lauffläche ein Tragabschnitt in oder an dem Laufring ausgebildet, an den sich beidseits jeweils (wenigstens) eine Aussparung anschließt. Der Tragabschnitt kann separat ausgebildet sein und z.B. aus Stahl und/oder Keramik etc. bestehen.

Vorzugsweise ist in wenigstens einem axial äußeren Bereich des Lagerrings (wenigstens) ein Steg zum Abstützen ausgebildet. Dadurch wird die Breite der Abstützung der Lagereinheit möglichst breit belassen, sodass Biegebelastungen gering gehalten werden können. Auch der Steg kann ein separates Bauteil sein und aus Stahl und/oder Keramik etc. bestehen.

Besonders bevorzugt ist die oder wenigstens eine Aussparung leer. Das bietet eine besonders deutliche Gewichtsreduzierung. Insbesondere ist die Aussparung als ein Leerraum oder Hohlraum ausgebildet. Insbesondere weist die Nabe im Bereich der Aussparung einen Leerraum auf.

Es ist ebenfalls besonders bevorzugt, dass im Bereich der Aussparung wenigstens ein Ausgleichselement angeordnet ist. Das Ausgleichselement ist insbesondere dazu geeignet und ausgebildet, die ausgesparte Aufnahmefläche passend oder passgenau gegenüber dem Lagersitz und/oder der Achse zu ergänzen. Möglich ist es auch, dass die Aussparung einen Hohlraum bildet, der zum Teil von einem Lagerring begrenzt wird.

Vorzugsweise ist das Ausgleichselement aus einem leichteren Material als der Lagerring gebildet.

Eine solche Ausgestaltung der Lagereinheiten mit Aussparungen und darin angeordneten Ausgleichselementen aus einem Leichtbaumaterial bietet ein geringes Gewicht und zugleich einen zuverlässigen Sitz. Beispielsweise können dazu kostengünstige Standardlagerbauteile eingesetzt werden, welche mit Aussparungen und Ausgleichselementen ausgestattet werden.

Vorzugsweise ist die Aussparung außerhalb eines der Lauffläche gegenüberliegenden Abschnitts der Aufnahmefläche angeordnet. So kann eine erhebliche Gewichtsreduktion bei einer besonders robusten und steifen Lauffläche erreicht werden. An dem der Lauffläche gegenüberliegenden Abschnitt der Aufnahmefläche ist insbesondere keine Aussparung angeordnet. An dem der Lauffläche gegenüberliegenden Abschnitt der Aufnahmefläche weist der Lagerring insbesondere die volle Wandstärke auf. Als Lauffläche wird in allen Fällen insbesondere eine in den Lagerring eingearbeitete Vertiefung zur Aufnahme und/oder Führung der Wälzkörper angesehen.

Der der Lauffläche gegenüberliegende Abschnitt liegt insbesondere in einer Flucht mit der Lauffläche. Insbesondere ist die Aussparung außerhalb einer Flucht mit der Lauffläche angeordnet. In der Flucht mit der Lauffläche ist insbesondere keine Aussparung angeordnet oder aber eine mit einem harten Material passgenau ausgefüllte Aussparung.

Der der Lauffläche gegenüberliegende Abschnitt ist vorzugsweise so breit wie die Lauffläche. Insbesondere ist der der Lauffläche gegenüberliegende Abschnitt so breit, wie die auf der Lauffläche abwälzenden Wälzkörper. Die Breite der Wälzkörper bezieht sich dabei insbesondere auf deren maximale Breite und/oder deren maximalen Durchmesser oder auf deren mittlere Bereite und/oder mittleren Durchmesser.

Insbesondere erstreckt sich die Aussparung über wenigstens ein Zehntel und vorzugsweise über wenigstens ein Viertel einer Querschnittsfläche des Lagerrings. Die Aussparung kann sich auch über wenigstens ein Achtel und bevorzugt über wenigstens ein Sechstel und besonders bevorzugt über wenigstens ein Drittel einer Querschnittsfläche des Lagerrings erstrecken. Es konnte gezeigt werden, dass solche Ausdehnungen der Aussparung ein besonders vorteilhaftes Verhältnis von Gewichtsreduzierung und Stabilität bietet. Die Aussparung kann sich auch über mehr oder weniger einer Querschnittsfläche des Lagerrings erstrecken.

Vorzugsweise ist der Lagerring einteilig ausgebildet. Insbesondere ist der Lagerring aus einem Stahlmaterial gefertigt. Beispielsweise ist der Lagerring aus Wälzlagerstahl und/oder einer anderen für Wälzlager geeigneten Stahllegierung gebildet. Der Lagerring kann auch aus einem anderen Metallmaterial gebildet sein. Insbesondere besteht der Lagerring nur aus einem Werkstoff. Derartige Lagerringe eignen sich besonders gut zur Verwendung in der erfindungsgemäßen Nabe, da diese sehr stabil und belastbar sind und zugleich vergleichsmäßig kostengünstige Bauteile darstellen. Zudem kann in solche Lagerringe die Aussparung unaufwendig eingearbeitet werden. Möglich ist aber auch, dass der Lagerring aus zwei oder mehr Werkstoffkomponenten gebildet ist und beispielsweise aus einem Hybridmaterial gefertigt ist.

Das Ausgleichselement ist vorzugsweise aus einem Kunststoffmaterial gebildet. Das Ausgleichselement kann auch teilweise oder vollständig aus einem Faserverbundwerkstoff gefertigt sein. Insbesondere ist das Ausgleichselement einteilig ausgebildet. Das Ausgleichselement kann auch aus einem anderen Werkstoff gefertigt sein, welcher insbesondere leichter als der Werkstoff des Lagerrings ist. Vorzugsweise ist die Aussparung in einem Lagerring aus Wälzlagerstahl angeordnet und mit einem Ausgleichselement aus einem Kunststoffmaterial passgenau ausgeglichen. Ausgleichselemente aus Kunststoff haben deutlich weniger Gewicht als das ausgesparte Material des Lagerrings und sind robust sowie kostengünstig.

Möglich ist es auch, dass das Ausgleichselement wenigstens teilweise oder im wesentlichen vollständig aus einem Schaummaterial besteht oder wenigstens ein solches Schaummaterial umfasst. In dem Ausgleichselement kann wenigstens ein Hohlraum enthalten sein, der insbesondere mit einem Fluid und vorzugsweise mit einem Gas gefüllt ist. Bei Ausgestaltungen, bei denen das Ausgleichselement ein Schaummaterial umfasst, können die Wandungen der Hohlräume oder Poren auch durch schwere Materialien gebildet werden. Möglich ist es auch, dass das Ausgleichselement einen Hohlraum oder mehrere Hohlräume umfasst. Möglich ist z.B. ein ringförmiges Ausgleichselement mit einer (dünnen) Wandung und einem von der Wandung teilweise oder vollständig umgebenen Hohlraum.

In einer bevorzugten Ausgestaltung ist das Nabengehäuse und insbesondere der Lagersitz zur Aufnahme einer Lagereinheit mit wenigstens einem genormten Passmaß ausgebildet. Das Ausgleichselement ist vorzugsweise dazu geeignet und ausgebildet, die Lagereinheit auf das genormte Passmaß zu bringen. Eine solche Ausgestaltung ermöglicht die Kombination besonders kostengünstiger und bewährter Normteile mit dem Ausgleichselement. Vorzugsweise umfasst die Nabe auch wenigstens eine Achse, welche in einer Lagereinheit mit einem genormten Passmaß aufnehmbar ist. Es ist bevorzugt, dass der Lagerring zusammen mit dem Ausgleichselement eine Aufnahmefläche mit einem genormten Passmaß bereitstellt.

Der Lagerring kann wenigstens eine umlaufende Aussparung aufweisen. Insbesondere ist das Ausgleichselement ringförmig ausgebildet. Es kann ein offener oder ein geschlossener Ring vorgesehen sein. Das ringförmige Ausgleichselement ist insbesondere in der umlaufenden Aussparung aufgenommen. Eine solche Ausgestaltung ist konstruktiv unaufwendig und bietet zugleich eine erhebliche Gewichtsersparnis. Zudem ist bei einer solchen Ausgestaltung das Ausgleichselement auch bei hohen Lagerkräften dauerhaft und zuverlässig in der Aussparung aufgenommen. Beispielsweise und vorzugsweise ist eine Aussparung und/oder das Ausgleichselement ringzylinderförmig ausgebildet.

Die Aussparung ist insbesondere an wenigstens einem Randabschnitt des Lagerrings angeordnet. Möglich und bevorzugt ist auch, dass die Aussparung an wenigstens einem Zentralabschnitt des Lagerrings angeordnet ist. Es kann auch eine durchgehende Aussparung vorgesehen sein. Die Aussparung kann sich über die gesamte Aufnahmefläche erstrecken. Beispielsweise verläuft die Aussparung dann über beide Randabschnitte und den Zentralabschnitt. Insbesondere erstreckt sich die Aussparung wenigstens teilweise über eine Außenseite des Außenrings und/oder über eine Innenseite des Innenrings. Die Aussparung kann auch nur über einen Randabschnitt und den Zentralabschnitt verlaufen. Möglich ist auch, dass die Aussparung an zwei gegenüberliegenden Randbereichen des Lagerrings ausgebildet ist. Dabei sind die Aussparungen vorzugsweise symmetrisch gegenüberliegend und/oder an einer umlaufenden Mittellinie des Lagerrings gespiegelt angeordnet. Bei einer oder mehreren Aussparungen in einem zentralen Bereich werden die Aussparungen insbesondere durch wenigstens zwei Randabschnitte seitlich begrenzt. Derart angeordnete Aussparungen haben einen besonders günstigen Einfluss auf die Stabilität des Lagerrings, da in den Randbereichen der Werkstoff des Lagerrings zum Abstützen dient.

Besonders bevorzugt weist der Lagerring zusammen mit dem in der Aussparung angeordneten Ausgleichselement eine im Wesentlichen ringzylindrische Kontur auf. Die ringzylindrische Kontur kann abschnittsweise unterbrochen sein. Beispielsweise kann an den Laufflächen eine konische Kontur vorgesehen sein. Insbesondere weist der Lagerring zusammen mit dem in der Aussparung angeordneten Ausgleichselement an der radialen Seite und an den daran angrenzenden axialen Seitenabschnitten eine ringzylindrische Kontur auf.

Insbesondere weist der Lagerring eine ringzylindrische Kontur auf, welche durch die Aussparung unterbrochen ist und welche durch das Ausgleichselement wieder hergestellt wird. Eine solche Kontur ermöglicht einen besonders stabilen unzuverlässigen Sitz der Lagerringe. Dabei ist möglich, dass die ringzylindrische Kontur wenigstens eine Abrundung an wenigstens einer Kante und/oder Ecke aufweist, beispielsweise eine Fase. Möglich ist auch, dass die ringzylindrische Kontur wenigstens eine Nut und/oder wenigstens eine Abkantung oder dergleichen aufweist. Möglich ist auch, dass der Lagerring zusammen mit dem in der Aussparung angeordneten Ausgleichselement eine andere für Lagerschalen von Wälzlagern geeignete Kontur aufweist.

In einer besonders bevorzugten Ausgestaltung weist das Ausgleichselement wenigstens eine Querschnittsfläche auf, welche dreieckig oder viereckig oder vieleckig ausgebildet ist. Die Querschnittsfläche kann auch rund/oder oval ausgebildet sein oder eine kurvenförmige Kontur aufweisen. Eine solche Querschnittsfläche hat den Vorteil, dass das Ausgleichselement unaufwendig hergestellt und in der Aussparung angeordnet werden kann. Es ist möglich, dass das Ausgleichselement abgerundete Kanten und/oder Ecken aufweist. Dann weist vorzugsweise auch die Querschnittsfläche abgerundete Ecken auf.

Die Querschnittsfläche des Ausgleichselements entspricht insbesondere einer Negativform einer Querschnittsfläche der Aussparung. Die Querschnittsfläche der Aussparung ergibt sich insbesondere durch die gegenüber einer vorgesehenen Passung fehlenden Bereiche der Aufnahmefläche. Die Querschnittsfläche des Ausgleichselements ist insbesondere so ausgebildet, dass das Ausgleichselement spielfrei bzw. passgenau in der Aussparung aufnehmbar ist. Insbesondere füllt das Ausgleichselement die Aussparung vollständig aus.

In allen Ausgestaltungen ist es bevorzugt, dass die Lagerringe einer Lagereinheit mit Ausgleichselementen mit unterschiedlichen Querschnittsflächen ausgestattet sind. Das hat den Vorteil, dass die Ausgleichselemente optimal an die in der Regel unterschiedlichen Bedingungen für Innenring und Außenring angepasst werden können. Vorzugsweise sind für den Außenring und den Innenring unterschiedliche Ausgleichselemente vorgesehen. Insbesondere sind für den Außenring und den Innenring Ausgleichselemente mit unterschiedlichen Querschnittsflächen vorgesehen. Bedingt durch die Anordnung des Innenrings innerhalb des Außenrings, weisen die Lagerringe insbesondere unterschiedliche Durchmesser auf. Die Ausgleichselemente für den Außenring und den Innenring können auch für Passmaße mit unterschiedlichen Toleranzen ausgebildet sein. Das ist besonders von Vorteil, um unterschiedliche Fertigungstoleranzen von Nabengehäuse und Achse auszugleichen.

Beispielsweise unterscheiden sich die Querschnittsflächen der Ausgleichselemente in wenigstens einer Seitenlänge. Beispielsweise kann das Ausgleichselement eines Lagerrings eine breitere und/oder längere Querschnittsfläche als das Ausgleichselement des anderen Lagerrings der Lagereinheit aufweisen. Bevorzugt ist auch, dass die Ausgleichselemente der Lagerringe unterschiedliche Körpervolumen aufweisen und beispielsweise größer bzw. kleiner ausgebildet sind. Vorzugsweise weisen auch die zugehörigen Aussparungen für die Ausgleichselemente der Lagerringe einer Lagereinheit unterschiedliche Querschnittsflächen bzw. Körpervolumen auf. Möglich ist aber auch, dass die Lagerringe einer Lagereinheit identische Querschnittsflächen aufweisen.

Es kann auch eine unterschiedliche Anzahl von Ausgleichselementen für die Lagerringe einer Lagereinheit vorgesehen sein. Beispielsweise kann der Innenring eine größere oder kleinere Anzahl von Ausgleichselementen als der Außenring aufweisen. Entsprechend ist auch die Anzahl der Aussparungen an die Anzahl der Ausgleichselemente angepasst.

Besonders bevorzugt ist das Ausgleichselement flächenbündig in der Aussparung angeordnet. Insbesondere stellt das Ausgleichselement zusammen mit dem Lagerring eine flächenbündige und/oder durchgehende Oberfläche für die Aufnahmefläche bereit. Das Ausgleichselement ist insbesondere derart in der Aussparung angeordnet, dass es nicht über eine Ebene des Lagerrings bzw. der Aufnahmefläche hervorsteht. Vorzugsweise ist das Ausgleichselement flächenbündig gegenüber radialen und/oder axialen Abschnitten der Aufnahmefläche angeordnet. Insbesondere ist die ringzylindrische Kontur von Lagerring und Ausgleichselement flächenbündig ausgestaltet. Solche flächenbündige Anordnungen des Ausgleichselementes ermöglichen einen zuverlässigen und belastbaren Sitz des Lagerrings in dem Nabengehäuse bzw. der Achse in dem Innenring.

In allen Ausgestaltungen ist es bevorzugt, dass das Ausgleichselement in Kontakt zu dem Lagersitz des Nabengehäuses oder zu der Achse angeordnet ist. Im montierten Zustand der Nabe ist ein am Innenring angeordnetes Ausgleichselement insbesondere in Kontakt zur Achse und/oder zum Lagersitz angeordnet. Ein Ausgleichselement des Außenrings ist insbesondere in Kontakt zu dem Lagersitz angeordnet. Derart angeordnete Ausgleichselemente unterstützen den spielfreien Sitz der Lagereinheit besonders vorteilhaft.

Es ist bevorzugt, dass die Aussparung wenigstens abschnittsweise den Durchmesser und/oder die Breite des Lagerrings verändert. Die Aussparung kann auch den Durchmesser über die gesamte Breite des Lagerrings reduzieren. Insbesondere reduziert die Aussparung wenigstens abschnittsweise den Außendurchmesser Außenrings. Insbesondere vergrößert die Aussparung wenigstens abschnittsweise den Innendurchmesser Innenrings. Die Aussparung reduziert vorzugsweise wenigstens abschnittsweise die Breite des Lagerrings.

Das Ausgleichselement ist vorzugsweise dazu geeignet und ausgebildet, den durch die Aussparung veränderten Durchmesser und/oder die durch die Aussparung veränderte Breite wieder passend gegenüber dem Lagersitz und/oder der Achse zu ergänzen. Dadurch kann das Gewicht der Lagereinheit erheblich reduziert werden und zugleich wird das erforderliche Passmaß trotz der Aussparungen eingehalten. Insbesondere vergrößert das Ausgleichselement den Außendurchmesser Außenrings im Bereich der Aussparung. Insbesondere reduziert das Ausgleichselement den Innendurchmesser Innenrings. Das Ausgleichselement vergrößert vorzugsweise die Breite des Lagerrings.

In einer vorteilhaften Weiterbildung weist das Ausgleichselement vor der Montage der Nabe gegenüber dem Lagersitz und/oder der Achse wenigstens ein Übermaß auf. Vorzugsweise ist das Ausgleichselement dazu geeignet und ausgebildet, sich im montierten Zustand der Nabe an ein Passmaß des Lagersitzes und/oder der Achse anzupassen. So kann sich das Ausgleichselement beim Einbau an den Lagersitz bzw. die Achse anpassen. Beispielsweise kann eine solche Lagereinheit in gröber tolerierte Lagersitze eingebaut werden. Das bietet eine besonders wirtschaftliche Fertigung der Nabe und insbesondere des Nabengehäuses bzw. der Achse. Insbesondere ist das Ausgleichselement mit einer Presspassung am Lagersitz und/oder an der Achse angeordnet.

Vorzugsweise ist das Ausgleichselement wenigstens teilweise elastisch ausgebildet ist. Insbesondere ist das Ausgleichselement aus einem elastischen und/oder flexiblen Werkstoff gefertigt. Das ermöglicht eine einfache und zügige Montage des Ausgleichselements auf dem Lagerring. Beispielsweise kann ein ringförmiges Ausgleichselement einfach auf den Lagerring aufgezogen werden. Ein elastisches Ausgleichselement mit einem Übermaß eignet sich zudem besonders gut dazu, sich im montierten Zustand der Nabe an ein Passmaß des Lagersitzes und/oder der Achse anzupassen.

Die erfindungsgemäße Nabenserie umfasst wenigstens zwei unterschiedlichen Nabentypen für wenigstens teilweise muskelbetriebene Fahrräder. Die Nabenserie umfasst wenigstens einen ersten Nabentyp und wenigstens einen sich davon unterscheidenden zweiten Nabentyp. Jede Nabe jedes Nabentyps umfasst ein Nabengehäuse und wenigstens einen Lagersitz und wenigstens eine an dem Lagersitz austauschbar aufgenommene Lagereinheit zur drehbaren Lagerung des Nabengehäuses gegenüber einer Achse. Der erste Nabentyp umfasst eine Lagereinheit eines ersten Lagertyps. Der zweite Nabentyp umfasst eine Lagereinheit eines zweiten Lagertyps. Dabei weisen eine Lagereinheit des ersten Lagertyps und eine Lagereinheit des zweiten Lagertyps im Wesentlichen gleiche Passmaße und insbesondere gleiche Passmaße auf. Die Lagereinheiten des ersten Lagertyps und des zweiten Lagertyps unterscheiden sich dabei in wenigstens einer wesentlichen Lagereigenschaft. Die wesentliche Lagereigenschaft ist insbesondere das Gewicht und/oder eine Toleranz und/oder eine Abdichtung. Insbesondere umfasst die erfindungsgemäße Nabenserie wenigstens eine Nabe und vorzugsweise mehrere Naben, wie es zuvor beschrieben wurde. Vorzugsweise umfasst wenigstens einer der Nabentypen Naben gemäß wenigstens einer Ausgestaltung oder Weiterbildung, wie es zuvor beschrieben wurde.

Die erfindungsgemäße Nabenserie bietet ebenfalls viele Vorteile. Die Nabenserie hat den erheblichen Vorteil, dass die Lagereinheiten der beiden Lagertypen gleiche Passmaße, aber Unterschiede in der wesentlichen Lagereigenschaft und insbesondere im Gewicht aufweisen.

Beispielsweise umfasst die Nabenserie neben einer Leichtbauvariante auch eine Variante mit einer kostenoptimierten Lagereinheit. Das ermöglicht zum Beispiel einen kostenorientierten Einstieg in den Radsport, wobei zunächst eine günstige Hochleistungsnabe mit einer Lagereinheit des zweiten Lagertyps eingesetzt wird. Diese Nabe kann dann später durch einfachen und unkomplizierten Austausch des zweiten Lagertyps gegen den ersten Lagertyp hinsichtlich des Gewichts und anderer wesentlicher Lagereigenschaften weiter verbessert werden. Die erfindungsgemäße Nabenserie ermöglicht somit einen besonders kostengünstigen Zugang zu hochwertigen Leichtbaunaben.

Vorzugsweise weisen die Lagereinheiten des ersten und des zweiten Lagertyps im Wesentlichen gleiche Passmaße und insbesondere gleiche Passmaße auf. Insbesondere unterscheiden sich die Lagereinheiten des ersten und des zweiten Lagertyps hinsichtlich des inneren Aufbaus und/oder der verwendeten Materialien. Insbesondere unterscheiden sich die Lagereinheiten des ersten und zweiten Lagertyps hinsichtlich der Lagerringe und insbesondere hinsichtlich des Gewichts der Lagerringe. Möglich ist auch, dass der erste und der zweite Lagertyp unterschiedliche Dichtungseinrichtungen zum Abschirmen von Feuchtigkeit und Schmutz aufweisen. Möglich ist auch, dass die Unterschiede die Wälzkörper der Lagereinheiten betreffen. Dadurch werden besonders wesentliche Lagereigenschaften vorteilhaft beeinflusst.

Insbesondere umfasst jede Lagereinheit des ersten und des zweiten Lagertyps jeweils wenigstens zwei Lagerringe mit jeweils wenigstens einer Aufnahmefläche und mit jeweils wenigstens einer Lauffläche. Insbesondere ist wenigstens ein Lagerring der wenigstens zwei Lagerringe, insbesondere ein Außenring, mit seiner Aufnahmefläche zu dem Lagersitz des Nabengehäuses ausrichtbar ausgebildet. Insbesondere ist wenigstens ein Lagerring der wenigstens zwei Lagerringe, insbesondere ein Innenring, mit seiner Aufnahmefläche zu der Achse und/oder dem Lagersitz ausrichtbar ausgebildet. Zwischen den Laufflächen der Lagerringe einer Lagereinheit sind auf diesen abwälzende Wälzkörper angeordnet. Solche Wälzlager eignen sich besonders gut zur Verwendung in den Naben der Nabenserie, da diese zuverlässige Laufeigenschaften bieten und zudem kostengünstig sind.

Besonders bevorzugt umfasst eine Lagereinheit des zweiten Lagertyps wenigstens einen Lagerring, welcher passend und vorzugsweise passgenau gegenüber dem Lagersitz und/oder der Achse ausgebildet ist. Insbesondere weist der Lagerringe des zweiten Lagertyps keine Aussparung auf. Dadurch ist ohne Verwendung von Ausgleichselementen eine definierte Passung der Lagereinheit erreichbar. Insbesondere ist der Lagerring einteilig ausgebildet. Insbesondere ist der Lagerring aus nur einem Werkstoff und insbesondere aus einer Stahllegierung und beispielsweise Wälzlagerstahl gefertigt. Insbesondere sind beide Lagerringe, nämlich der Innenring und Außenring, des zweiten Lagertyps derart ausgebildet. Ein solcher zweiter Lagertyp hat den Vorteil, dass damit ausgestattete Naben einen kostengünstigen Zugang zu der Nabenserie bieten.

Besonders bevorzugt umfasst eine Lagereinheit des ersten Lagertyps wenigstens einen Lagerring mit wenigstens einer Aussparung in seiner Aufnahmefläche. Durch die Aussparung ist der Lagerring im Bereich der Aussparung beabstandet gegenüber dem Lagersitz und/oder der Achse angeordnet.

Insbesondere ist im Bereich der Aussparung wenigstens abschnittsweise wenigstens ein Ausgleichselement angeordnet. Das Ausgleichselement ist vorzugsweise dazu geeignet und ausgebildet, die ausgesparte Aufnahmefläche passend gegenüber dem Lagersitz und/oder der Achse wiederherzustellen.

Vorzugsweise ist die Lagereinheit des ersten Lagertyps wie zuvor für die erfindungsgemäße Nabe beschrieben ausgebildet. Insbesondere sind beide Lagerringe, nämlich der Innenring und Außenring, des ersten Lagertyps derart ausgebildet. Das ermöglicht eine Ausstattung der Nabenserie mit Naben, welche die Vorteile der erfindungsgemäßen Nabe bieten.

Vorzugsweise ist das Ausgleichselement aus einem leichteren Material als der Lagerring gebildet. Das ermöglicht eine erhebliche Reduzierung des Gewichts von Nabentypen der Nabenserie, da die Lagereinheiten in der Regel einen großen Anteil an dem Gesamtgewicht der Nabe haben.

Es ist bevorzugt, dass die Laufflächen der Lagerringe der Lagereinheiten des ersten und zweiten Lagertyps aus einem Stahlmaterial gebildet sind. Solche Laufflächen sind besonders haltbar und die Lagerringe entsprechend kostengünstig herstellbar. Möglich ist auch, dass die Laufflächen aus anderen Werkstoffen gefertigt sind. Es ist möglich, dass die Lagerringe des ersten und zweiten Lagertyps sich in dem Werkstoff ihrer Laufflächen unterscheiden.

In allen Ausgestaltungen der Nabenserie ist es bevorzugt, dass das Nabengehäuse zu wenigstens einem erheblichen Anteil und insbesondere vollständig aus Leichtmetall und/oder einem Leichtbauwerkstoff gebildet ist. Solche Naben Gehäuse bieten ein geringes Gewicht und zugleich eine hohe Stabilität. Beispielsweise kann das Nabengehäuse aus einer Aluminiumlegierung und/oder aus einem Faserverbundwerkstoff gebildet sein. Es ist möglich, dass das Nabengehäuse sowohl aus einem Leichtmetall als auch aus einem Faserverbundwerkstoff besteht. Es ist möglich, dass das Nabengehäuse der beiden Nabentypen identisch ausgebildet ist. Möglich ist aber auch, dass die Nabengehäuse der Nabentypen unterschiedlich ausgebildet sind.

Das Passmaß betrifft insbesondere ein Einbaumaß des Außenrings gegenüber dem Lagersitz und/oder eine Abmessung des Innenrings gegenüber der aufzunehmenden Achse. Das Passmaß beschreibt insbesondere einen Durchmesser und/oder eine Breite der Lagerringe. Das Ausgleichselement ergänzt die ausgesparte Aufnahmefläche insbesondere passgenau gemäß einer für die Nabe geforderten Passung von Lagereinheit, Lagersitz und Achse.

Die Aufnahmefläche ist insbesondere der Bereich des Lagerrings, welcher im montierten Zustand in Kontakt zu dem Lagersitz bzw. der aufzunehmenden Achse steht. Die Aufnahmefläche ist insbesondere an der radialen Außenseite des Außenrings und/oder an der radialen Innenseite des Innenrings angeordnet. Die Aufnahmefläche kann auch an wenigstens einem axialen Seitenabschnitt des Lagerrings angeordnet sein.

Die Laufflächen sind insbesondere an wenigstens einem Abschnitt der Außenring-Innenseite und der Innenring-Außenseite angeordnet. Im Rahmen der vorliegenden Erfindung umfasst das Nabengehäuse auch wenigstens einen Rotor. Das ist insbesondere dann der Fall, wenn die Nabe als eine Hinterradnabe bzw. Antriebsnabe ausgebildet ist. Im Rahmen der vorliegenden Erfindung wird unter dem Lagersitz des Nabengehäuses dann auch der Lagersitz des Rotors verstanden. Vorzugsweise ist der Rotor gegenüber einer Nabenhülse des Nabengehäuses drehbar gelagert.

Weitere Vorteile und Merkmale der vorliegenden Erfindung ergeben sich aus den Ausführungsbeispielen, die nachfolgend mit Bezug auf die beiliegenden Figuren erläutert werden.

In den Figuren zeigen:
- Fig. 1: eine schematische Seitenansicht eines Fahrrads;
- Fig. 2: eine schematische Seitenansicht eines anderen Fahrrads;
- Fig. 3: eine schematische Darstellung einer erfindungsgemäßen Nabe in einer geschnittenen Ansicht;
- Fig. 4: eine schematische Darstellung einer anderen Nabe in einer geschnittenen Ansicht;
- Fig. 5 - 9: stark schematische Darstellungen verschiedener Ausgestaltungen von Lagereinheiten eines Lagertyps; und
- Fig. 10: eine stark schematische Darstellung einer Lagereinheit eines anderen Lagertyps.

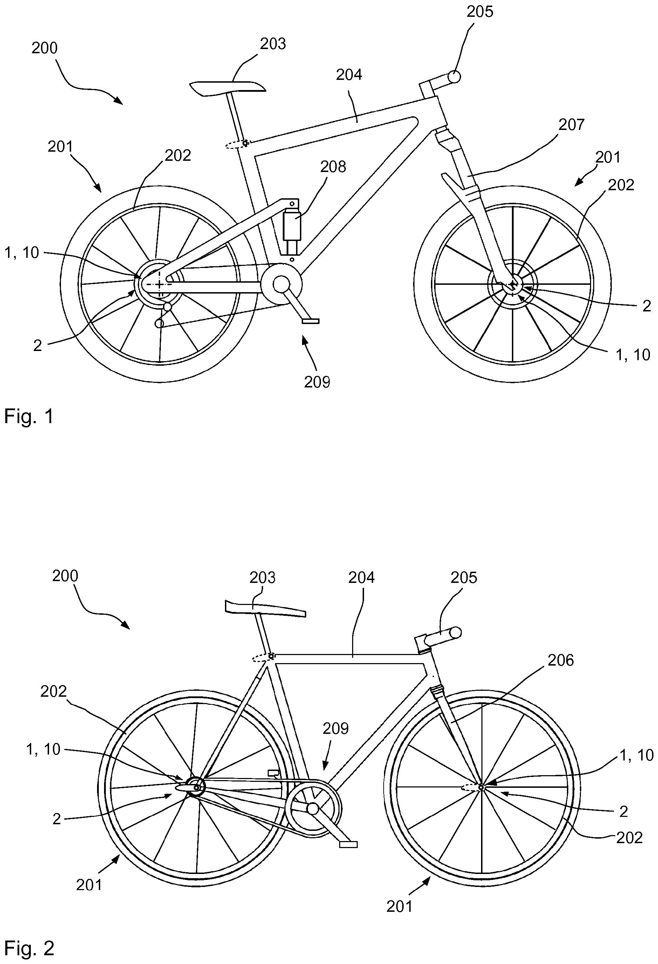

Figur 1 zeigt eine stark schematische Darstellung eines Fahrrads 200, welches hier als ein Mountainbike ausgebildet ist. Das Fahrrad 200 kann auch als ein teilweise muskelbetriebenes Zweirad und beispielsweise als ein E-Bike ausgebildet sein.

Das Fahrrad 200 weist zwei Laufräder 201 auf, welche hier mit jeweils einer Nabe 1, 10 und einer Felge 202 ausgestattet sind. Dabei können die Naben 1, 10 verschiedenen Nabentypen 12, 22 entsprechen. Das Fahrrad 200 ist vollgefedert ausgeführt. Die Gabel ist dazu als eine Federgabel 207 ausgebildet und der Rahmen 204 verfügt über einen Hinterraddämpfer 208.

Weiterhin umfasst das Fahrrad 200 einen Sattel 203, einen Rahmen 204, einen Lenker 205 und eine Gabel 206 sowie weitere Fahrradkomponenten. Als Teil eines Pedalantriebs 209 umfasst das Fahrrad 200 hier eine Kettenschaltung. Für eine Kettenschaltung kann die Nabe 1, 10 beispielsweise einen Rotor aufweisen, an dem einzelne Ritzel bzw. eine Kassette aufnehmbar sind.

Weiterhin verfügt das Fahrrad 200 über eine nicht näher gezeigte Bremseinrichtung. Dazu kann an den Naben 1, 10 der beiden Laufräder 201 jeweils eine Bremsenaufnahme vorgesehen sein, um eine Bremsscheibe drehfest zu montieren. Die als Vorderrad und Hinterrad ausgebildeten Laufräder 201 sind jeweils an Ausfallenden einer Gabel 207 bzw. des Rahmens 204 befestigt.

In der Figur 2 ist ein als Rennrad bzw. Tourenrad ausgebildetes Fahrrad 200 gezeigt. Auch dieses Fahrrad 200 verfügt über zwei Laufräder 201 mit jeweils einer Nabe 1, 10 und einer Felge 202. Die Naben 1, 10 (für das Vorderrad und das Hinterrad) können jeweils verschiedenen Nabentypen 12, 22 (für das Vorderrad und das Hinterrad) entsprechen. Zudem weist das Fahrrad 200 einen Sattel 203, einen Rahmen 204, einen Lenker 205 und eine Starrgabel 206 sowie einen Pedalantrieb 209 auf.

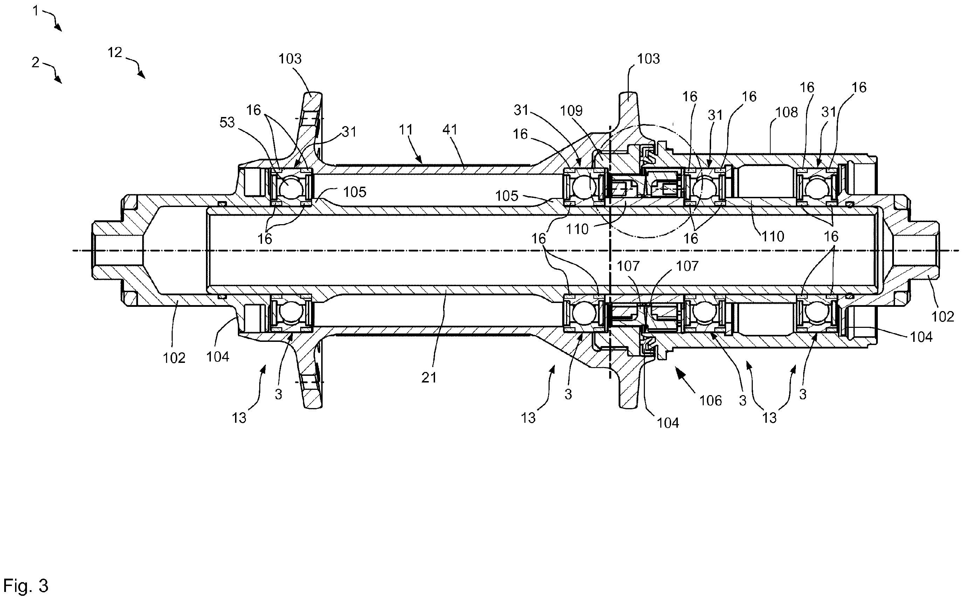

Die Figur 3 zeigt eine erfindungsgemäße Nabe 1, hier eine Hinterradnabe. In entsprechender Weise kann auch eine Nabe als Vorderradnabe ausgebildet sein. Die Nabe 1 umfasst hier ein Nabengehäuse 11 mit einer Nabenhülse 41 und einem Rotor 108. Die Nabenhülse 41 umfasst zwei Speichenflansche 103 zur Aufnahme von Speichen, sodass die Nabe 1 in einem Laufrad 201 angeordnet werden kann.

Das Nabengehäuse 11 umfasst hier Lagersitze 31 zur Aufnahme von vier Lagereinheiten 3 mit Wälzkörpern 53. Dabei sind zwei Lagereinheiten 3 in der Nabenhülse 41 angeordnet, sodass diese drehbar gegenüber einer Achse 21 gelagert ist. Der Rotor 108 ist hier mittels zwei Lagereinheiten 3 gegenüber der Achse 21 drehbar gelagert. Eine entsprechende Vorderradnabe weist regelmäßig nur zwei Lagereinheiten 3 in der Nabenhülse 41 auf.

Zwischen der Rotoreinrichtung 108 und der Nabenhülse 41 ist hier eine Freilaufeinrichtung 106 angeordnet, welche eine Drehbarkeit des Rotors 108 gegenüber der Nabenhülse 41 nur in eine Richtung zulässt. In die andere Drehrichtung geht die Freilaufeinrichtung 106 in einen Eingriff, sodass die Nabenhülse 41 von dem Rotor 108 mitgenommen und mit diesem gemeinsam gedreht wird.

Der Rotor 108 ist hier zur Aufnahme wenigstens eines Zahnrads und insbesondere einer Mehrzahl von Zahnrädern bzw. einer Kassette ausgebildet. So kann der Rotor 108 über eine Kette und den Pedaltrieb 109 eines Fahrrads 200 in eine Drehbewegung versetzt werden. Ist die Freilaufeinrichtung 106 im Eingriff, wird dann auch die Nabenhülse 41 und somit das gesamte Laufrad 201 in eine Drehbewegung versetzt. Im Freilauf kann sich die Nabenhülse 41 und das gesamte Laufrad 201 unabhängig vom Rotor 108 drehen, sodass das Fahrrad 200 unabhängig vom Pedalantrieb 209 rollen kann.

Die Freilaufeinrichtung 106 umfasst hier zwei Zahnscheiben 107, welche jeweils eine axiale Verzahnung aufweisen. Ist die Freilaufeinrichtung 106 im Eingriff, greifen die Zähne ineinander, sodass die Zahnscheiben 107 das Antriebsmoment auf die Nabenhülse 41 übertragen. Während des Freilaufs rücken die Zahnscheiben 107 voneinander ab, sodass sich Rotor 108 und Nabenhülse 41 unabhängig voneinander drehen können.

Um einen zuverlässigen Eingriff der Zahnscheiben 107 zu gewährleisten, ist hier eine nicht näher dargestellte Vorspanneinrichtung vorgesehen, welche die Zahnscheiben 107 gegeneinander vorspannt. Die Vorspanneinrichtung kann insbesondere eine oder zwei jeweils z.B. schwimmend gelagerte Vorspanneinheiten wie Spiralfedern oder andere Vorbelastungseinheiten umfassen. Zur Übertragung des Drehmoments ist die eine Zahnscheibe 107 drehfest gegenüber dem Rotor 108 und die andere Zahnscheibe 107 drehfest gegenüber der Nabenhülse 41 aufgenommen. Die Nabenhülse 41 umfasst dazu einen hier eingeschraubten Gewindering 109, in welchen die Zahnscheibe 107 drehfest eingesetzt ist.

Die Achse 21 weist hier zwei umlaufende Absätze 105 auf, welche ein axiales Verschieben der Achse 21 innerhalb des Nabengehäuses 11 verhindern. Dazu liegen die Absätze 105 an jeweils einer der beiden Lagereinheiten 3 der Nabenhülse 41 an.

Die Lagereinheiten 3 zur Lagerung des Rotors 108 sind hier durch eine Distanzhülse 110 voneinander beabstandet. Ebenso sind die benachbart zueinander liegenden Lagereinheiten 3 der Nabenhülse 41 und des Rotors 8 durch eine Distanzhülse 110 definiert voneinander beabstandet.

An den beiden axialen Enden der Achse 21 ist hier jeweils ein Adapterring 102 angeordnet. Die Adapterring 102 dienen zur Anpassung des Durchmessers der Achse 21 auf die jeweiligen Ausfallenden des Fahrrads 200. Die Adapterringe 102 sind hier vorzugsweise aufgesteckt und werkzeuglos von der Achse 21 abziehbar. Die Adapterringe 102 werden beispielsweise durch einen umlaufenden O-Ring auf der Achse 21 gehalten. Im eingebauten Zustand der Nabe 1 werden die Adapterringe 102 dann durch die aufgebrachte Vorspannung gehalten.

Die Nabe 1 kann aber auch mit einer Achse 21 ausgestattet sein, welche ohne Adapterringe 102 in die Ausfallenden aufgenommen werden kann. Dann wird z. B. eine entsprechende Steckachse durch die Achse 21 geführt und an den Ausfallenden befestigt.

Die Adapterringe 102 sind hier mit einer umlaufenden Dichtung 104 ausgebildet. Durch die Dichtungen 104 wird ein Eintreten von Schmutz und Feuchtigkeit in die Nabe 1 vermieden. Zudem ist hier eine weitere Dichtung 104 zwischen dem Rotor 108 und der Nabenhülse 41 angeordnet. Diese Dichtung 104 ist vorzugsweise als eine Labyrinthdichtung ausgeführt oder umfasst eine solche.

Die erfindungsgemäße Nabe 1 kann aber auch mit einer anderen Art einer Freilaufeinrichtung 106 ausgestattet sein. Beispielsweise kann ein Sperrklinkenfreilauf vorgesehen sein. Möglich und bevorzugt ist es aber auch, dass die erfindungsgemäße Nabe 1 als eine Antriebsnabe ohne Freilaufeinrichtung 106 ausgebildet ist.

Die erfindungsgemäße Nabe 1 kann aber auch als eine Nabe 1 ohne Antrieb bzw. Rotor 108 und beispielsweise als eine Vorderradnabe ausgestaltet sein. In einer solchen Ausgestaltung umfasst das Nabengehäuse 11 vorzugsweise nur die Nabenhülse 41 und keinen Rotor 108. Zudem weist die Nabe 1 dann vorzugsweise nur zwei Lagereinheiten 3 auf, durch welche die Nabenhülse 41 drehbar gegenüber einer Achse 21 gelagert ist. Die Nabe 1 kann aber auch mit fünf oder sechs oder mehr Lagereinheiten 3 ausgestattet sein, beispielsweise bei einem Tandem oder einem E-Bike.

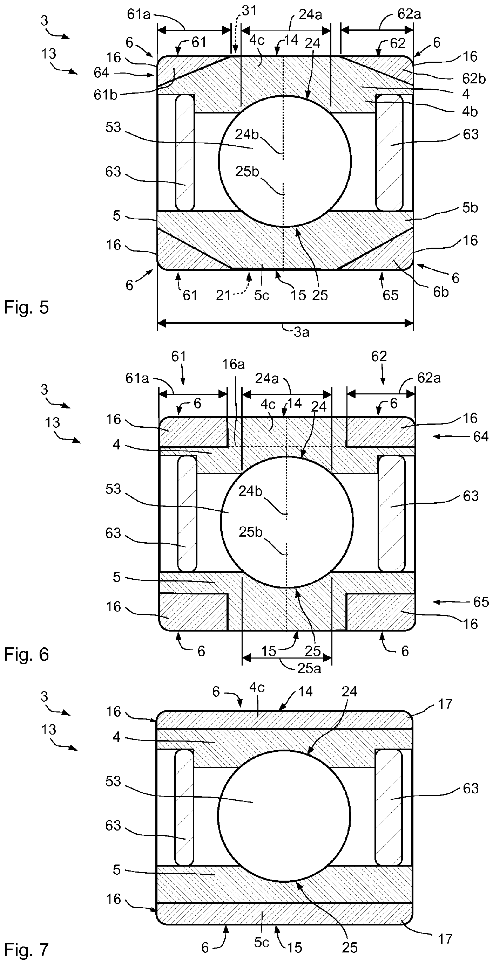

Um das Gewicht der Nabe 1 vorteilhaft zu reduzieren, sind die Lagereinheiten 3 hier mit Aussparungen 6 versehen, in denen vorzugsweise Hohlräume ausgebildet oder Ausgleichselemente 16 aus vorzugsweise einem Kunststoffmaterial angeordnet sind. Durch die Ausgleichselemente 16 wird die gewünschte Passung zwischen den Lagereinheiten 3 und dem Lagersitz 31 bzw. der Achse 21 hergestellt, welche sonst im Bereich der Aussparungen 6 einen gegebenenfalls unerwünschten Abstand aufweisen würde. Die Lagereinheit 3 mit Aussparungen 6 und Ausgleichselementen 16 wird mit Bezug zu den Figuren 5 bis 9 näher beschrieben.

In den Figuren 5 bis 9 sind Ausgestaltungen der Lagereinheiten 3 gezeigt, wie sie beispielsweise in der erfindungsgemäßen Nabe 1 eingesetzt werden können.

Die Lagereinheiten 3 in den Figuren 5 bis 9 sind hier geschnitten dargestellt, sodass die Querschnittsflächen der jeweiligen Lagerringe 4, 5 und die Querschnittsflächen der jeweiligen Aussparungen 6 bzw. Ausgleichselemente 16 besonders gut zu erkennen sind. Die Querschnittsflächen sind schraffiert. So ist auch besonders gut zu erkennen, wie weit sich eine Aussparung 6 bzw. ein Ausgleichselement 16 über eine Querschnittsfläche des Lagerrings 4, 5 erstreckt.

Die Lagereinheit 3 umfasst hier in den Figuren 5 bis 9 jeweils zwei Lagerringe 4, 5, welche als ein Außenring 4 und ein Innenring 5 ausgebildet sind. Im montierten Zustand wird der Außenring 4 in einem Lagersitz 31 eines hier nicht dargestellten Nabengehäuses 11 aufgenommen, vgl. auch Fig. 3. Der Innenring 5 weist ebenfalls eine Aufnahmefläche 15 auf, welche an der hier nicht gezeigten Achse 21 angeordnet wird (vgl. Fig. 3).

Zwischen den Lagerringen 4, 5 sind Wälzkörper 53 angeordnet, welche hier als Kugeln ausgebildet sind. Zwischen den einzelnen Wälzkörpern 53 kann ein Abstandshalter und beispielsweise ein Käfig angeordnet sein. Zum Abwälzen der Wälzkörper 53 weist jeder Lagerring 4, 5 eine Lauffläche 24, 25 auf. Die Laufflächen können als Führungsrillen ausgebildet sein. Die Lauffläche 24 des Außenrings 4 ist dabei an der Innenseite und die Lauffläche 25 des Innenrings 5 an der Außenseite angeordnet. Die Lagerringe 4, 5 sind hier beispielsweise jeweils einstückig und aus einem Wälzlagerstahl gefertigt. Vorzugsweise sind die Lagereinheiten als Rillenkugellager ausgebildet.

An den axialen Seiten der Lagereinheit 3 ist hier jeweils ein Dichtelement 63 angeordnet, um das Eindringen von Feuchtigkeit und Schmutz zu verhindern. Es können auch weitere, hier nicht gezeigte Dichtelemente vorgesehen sein. Möglich ist auch, dass die Lagereinheit 3 nur ein Dichtelement 63 oder gar kein Dichtelement 63 aufweist.

Die Lagerringe 4, 5 sind hier jeweils mit einer Anzahl von Aussparungen 6 versehen. Hier sind auf der radial äußeren Umfangsfläche des Außenrings 4 und auf der radial inneren Umfangsfläche des Innenrings 5 jeweils zwei Aussparungen 6 ausgebildet, nämlich in der Orientierung der Zeichnung jeweils eine linke Aussparung 61 und eine rechte Aussparung 62 im Außen- und Innenring 4, 5. Anders betrachtet sind im Innenring 5 zwei innere Aussparungen 65 und im Außenring 4 zwei äußere Aussparungen 64 ausgebildet (jeweils rechts und links eine).

Im Bereich der Aussparungen 6 ergibt sich im montierten Zustand der Lagereinheit 3 eine Beabstandung des Lagerrings 4, 5 gegenüber dem Lagersitz 31 bzw. der Achse 21. Daher ist hier jede Aussparung mit jeweils einem Ausgleichselement 16 ausgefüllt. Dadurch wird die Aufnahmefläche 14, 15 wieder auf ein Passmaß gebracht, welches die Lagereinheit 3 ohne Aussparungen 16 aufweisen würde und welches einen passgenauen Lagersitz ermöglicht.

Die Ausgleichselemente 16 sind hier flächenbündig an den Aussparungen 6 angeordnet. Dadurch stellen die Ausgleichselemente 16 zusammen mit dem jeweiligen Lagerring 4, 5 eine flächenbündige und durchgehende Aufnahmefläche 14, 15 bereit. Die Ausgleichselemente 16 ergänzen die Aussparungen 6 hier so, dass die Lagerringe 4, 5 eine im Wesentlichen ringzylindrische Kontur aufweisen.

Die Ausgleichselemente 16 können beispielsweise formschlüssig und/oder kraftschlüssig und/oder stoffschlüssig mit den Lagerringen 4, 5 verbunden werden. Beispielsweise können die Ausgleichselemente 16 mit den Lagerringen 4, 5 verpresst und/oder verklebt werden. Die Ausgleichselemente 16 können hier auch elastisch ausgebildet sein und auf die Lagerringe 4, 5 aufgezogen sein.

Die Ausgleichselemente 16 werden vorzugsweise auch zum Toleranzausgleich eingesetzt und können dann dazu vor der Montage ein Übermaß aufweisen. Durch die Montage ergibt sich dann vorzugsweise eine Presspassung.

Durch das Einbringen von Aussparungen 6 in die vergleichsweise schweren Lagerringe 4, 5 und das anschließende Einsetzen von leichteren Ausgleichselementen 16 kann eine erhebliche Gewichtsreduktion der Lagereinheiten 3 erreicht werden. Durch das passgenaue Angleichen der Aufnahmeflächen 14, 15 anhand der Ausgleichselemente 16 haben diese gewichtsoptimierten Lagereinheiten 3 den besonderen Vorteil, dass sie wie vergleichbare Lagereinheiten ohne Aussparungen 6 und z. B. Normlager verbaut werden können. Die Ausgleichselemente 16 sind hier aus einem leichteren Material als die Lagerringe 4,5 und beispielsweise aus einem Kunststoffmaterial gefertigt.

Die hier gezeigten Lagereinheiten 3 weisen insbesondere ein genormtes Passmaß auf, welches durch das Ergänzen der ausgesparten Bereiche 6 mit den Ausgleichselementen 16 erreicht wird. Die Ausgleichselemente 16 ergänzen somit die Aufnahmefläche im Bereich der Aussparungen 6, sodass das genormte Passmaß trotz der Aussparungen 6 erreicht wird.

Die in der Figur 5 gezeigten Aussparungen 6 sind umlaufend an den Lagerringen 4, 5 angeordnet. Dabei sind die Aussparungen 6 eines Lagerrings 4, 5 an dessen gegenüberliegenden Randabschnitten angeordnet. In einem dazwischen liegenden Zentralabschnitt ist keine Aussparung 6 vorgesehen. Die axiale Mitte 24b der Lauffläche 24 befindet sich hier auch in der axialen Mitte der Lagereinheit 3. Bei der Lagereinheit 3 nach Fig. 5 befindet sich über der gesamten Breite 24a der Lauffläche 24 keine Aussparung 6. Dort ist ein Tragabschnitt 4c ausgebildet, der eine hochgenaue Positionierung der Lagereinheit 3 gewährleistet. Auch beim Auftreten von hohen Biegemomenten wird sicher gestellt, dass im Bereich der Kontaktfläche der Wälzkörper 53 keine lokale Deformation an dem Lagerring 5 erfolgt. Das ist wichtig, da insbesondere bei einer Hinterradnabe selbst kleine Durchbiegungen zu großen Stabilitätsproblemen führen können. Es hat sich herausgestellt, dass ein Tragabschnitt 5c im Bereich der Lauffläche 25 oder sogar über die gesamte Breite 25a der Lauffläche 25 sehr vorteilhaft ist. Entsprechend wird vorzugsweise im Bereich des Außenrings 4 ein Tragabschnitt 4c im Bereich der Mitte 24b der Lauffläche 24 oder sogar über der gesamten Breite 24a der Lauffläche 24 zur Verfügung gestellt. Dadurch wird eine unerwünschte und schädliche Durchbiegung der Lagereinheit 3 und der Nabe 1 verhindert. Gleichzeitig können in benachbarten Bereichen des Lagerrings 4 bzw. 5 Aussparungen 6 ausgebildet sein, die als Leerräume oder Hohlräume ausgebildet sind oder die mit einem Ausgleichselement gefüllt oder ausgerüstet sind. Die Tragabschnitte 4c und 5c können als separate Bauteile z. B. aus einem Keramikmaterial ausgebildet sein oder aber einstückig mit den lagerringen 4, 5 gefertigt sein. In beiden Fällen ist ein zuverlässiger Betrieb sichergestellt. Wichtig ist, dass im Bereich der Laufflächen keine große Nachgiebigkeit an den Lagereinheiten 3 auftritt.

Im Außenring 4 sind zwei auf der Außenseite äußere Aussparungen 64 ausgebildet, nämlich eine linke Aussparung 61 am linken Ende und eine hier symmetrisch ausgebildete rechte Aussparung 62 am rechten Ende.

Im Innenring 5 sind zwei innere Aussparungen 65 ausgebildet, nämlich eine linke Aussparung 61 am linken Ende und eine hier symmetrisch ausgebildete rechte Aussparung 62 am rechten Ende.

Die Tragabschnitte 4c, 5c sind im zentralen Bereich ausgebildet und eine Ebene quer zu der Achse durch die Mitte der Lauffläche 24b und/oder durch die Mitte der Lauffläche 25b bzw. der Laufbahnen schneidet die Tragabschnitte 4c und/oder 5c.

Die Aussparungen 61 und 62 im Außenring 4 erstrecken sich jeweils über eine axiale Breite 61a bzw. 62a, die vorzugsweise größer ist als 1/4 oder 1/5 der Lagerbreite 3a. Ein Flächenanteil der Aussparungen 61 und 62 im Außenring 4 an der Querschnittsfläche 4b des (z. B. einstückigen und insbesondere aus Stahl bestehenden Teils) des Außenrings 4 ist größer als 1/12 und insbesondere größer als 1/10 und kann in der Ausgestaltung nach Fig. 5 insgesamt 1/8 oder ein 1/6 erreichen oder überschreiten. Entsprechendes gilt für die Aussparungen 61 und 62 im Innenring 5. Insgesamt kann durch Leer- oder Hohlräume oder durch den Einsatz von Ausgleichselementen 16 aus leichtem Kunststoff ein erheblicher Anteil an Gewicht eingespart werden, ohne Einbußen bei Qualität, Funktion und Lebensdauer.

Die in den Aussparungen 6 angeordneten Ausgleichselemente 16 weisen hier Figur 5 eine im Wesentlichen dreieckige Querschnittsfläche auf. Da die umlaufenden Ausgleichselemente 16 eine abgeflachte Kante bzw. Fase aufweisen, ist eine Ecke des Querschnittdreiecks hier entsprechend abgeflacht ausgebildet.

Durch die Aussparungen 6 werden die Lagerringe 4, 5 hinsichtlich ihres Durchmessers und ihrer Breite im Bereich der Aussparungen 6 verändert. Durch die Ausgleichselemente 16 werden Breite und Durchmesser der Lagerringe 4, 5 dann wieder auf das ursprüngliche und gegebenenfalls erforderliche Passmaß gebracht.

In der Figur 6 ist eine Lagereinheit 3 gezeigt, welche Ausgleichselemente 16 mit einer im Wesentlichen viereckigen Querschnittsfläche aufweist. Die Ausgleichselemente haben dabei jeweils eine ringzylindrische Kontur. Dabei ist die nach außen freiliegende Kante entsprechend abgerundet bzw. mit einer Fase versehen, so das auch eine Ecke der Querschnittsfläche entsprechend abgerundet ist. Hier kann ein höherer Gewichtsanteil eingespart werden, da eine größere Fläche bzw. ein größeres Volumen entfernt wird. Auch die Lagereinheit 3 aus Fig. 6 weist im Bereich der Mitte 24b bzw. 25b oder Flucht der Lauffläche 24 bzw. 25 jeweils (nasenförmige) Tragabschnitte 4c bzw. 5c auf, die für eine zuverlässige Abstützung sorgen und auch kleinste Durchbiegungen verhindern.

Gestrichelt eingezeichnet ist in Fig. 6 eine Trennlinie 16a, die andeutet, dass die Tragabschnitte 4c bzw. 5c separat ausgebildet sein können und dann nicht werkstoffeinstückig mit dem jeweiligen Lagerring gebildet sind. Die Tragabschnitte 4c bzw. 5c bestehen dann aus einem stabilen und harten Werkstoff, der wenigstens etwa genauso hart ist wie der Stahl des Lagerrings zwischen dem Tragabschnitt und dem Wälzkörper. Beispielsweise kann der Tragabschnitt wenigstens zum Teil oder vollständig aus wenigstens einer Keramik bestehen. Der Tragabschnitt 4c bzw. 5c kann z. B. mit dem Lagerring 4 bzw. 5 verpresst und/oder verklebt sein. Bei einer solchen Ausgestaltung wird die Belastbarkeit und Haltbarkeit der Lagereinheit nicht verringert, das Gewicht aber deutlich reduziert. Dabei können die standardisierten Abmessungen der Lagereinheit insgesamt erhalten bleiben.

Da die Umlaufgeschwindigkeiten im Betrieb - auch bei hohen Fahrgeschwindigkeiten des Fahrrads - im Vergleich zu vielen industriellen Anwendungen relativ gering bleiben, entsteht in den Lagereinheiten 3 nur relativ wenig Wärme, die über die Nabe zuverlässig abgegeben werden kann. Eine Überhitzung der Nabe 1 und der Lagereinheiten 3 tritt daher durch die Betriebsdrehzahl bedingt nicht auf. Ausdehnungsräume für die Wälzlager sind im Bereich der Laufflächen nicht erforderlich und können insbesondere sogar schädlich für das Betriebsverhalten sein. Deshalb werden im Bereich der jeweiligen Mitte 24b und 25b der Laufflächen 24 und 25 Tragabschnitte 4c und 5c aus stabilen Materialien bevorzugt, die insbesondere einstückig mit dem jeweiligen Lagerring 4, 5 gefertigt sind.

In der Ausgestaltung nach Fig. 6 und auch in den anderen Ausgestaltungen und Ausführungsbeispielen kann das Ausgleichselement 16 oder wenigstens ein Ausgleichselement 16 auch wenigstens einen Hohlraum aufweisen. Beispielsweise kann das Ausgleichselement 16 aus einem Schaummaterial bestehen oder ein solches umfassen und (mikroskopisch) kleine Hohlräume aufweisen, die in der Darstellung nach Fig. 6 so klein sein können, dass sie in der Fig. 6 nicht sinnvoll zeichnerisch dargestellt werden können. Möglich ist es auch, dass ein Ausgleichselement 16 eine Außenwandung und einen inneren Hohlraum aufweist.

In der Figur 7 ist eine Lagereinheit 3 gezeigt, bei welcher die Lagerringe 4, 5 jeweils eine durchgehende Aussparung 6 aufweisen. Die Aussparung 6 erstreckt sich dabei sowohl über die Randabschnitte als auch über den zentralen Abschnitt. Die Aussparung 6 des Außenrings 4 reduziert somit den Durchmesser des Außenrings 4, sodass dieser ein entsprechendes Spiel gegenüber dem Lagersitz 31 des Nabengehäuses 11 aufweist. Durch ein entsprechend ringzylindrisch ausgestaltetes Ausgleichselement 16 wird der Außendurchmesser des Außenrings 4 wieder auf das geforderte Passmaß gebracht. Das Ausgleichselement 16 am Außenring 4 wird hier durch einen Keramikring 17 oder einen Ring aus einem Keramikmaterial gebildet. Dadurch stellt der Keramikring 17 einen Tragabschnitt 4c zur Verfügung. Es besteht keine Gefahr einer Durchbiegung, da kein Hohlraum im zentralen Abschnitt im Bereich der Lauffläche 24 besteht. Das Material des Ausgleichselements 16 ist ausreichend fest und dennoch sehr leicht.

In entsprechender Weise wird auch am Innenring vorgegangen. Der Innendurchmesser des Innenrings 5 wurde durch die Aussparung hier vergrößert, sodass ein Spiel gegenüber der aufzunehmenden Achse 21 auftritt. Durch das hier ebenfalls ringzylindrisch ausgebildete Ausgleichselement 16 in Form eines Keramikringes 17 erhält der Innenring wieder den für das Passmaß geforderten Durchmesser. Somit können Innenring 5 und Achse 21 mit der gewünschten Passung montiert werden. Eine unerwünschte Durchbiegung wird zuverlässig verhindert.

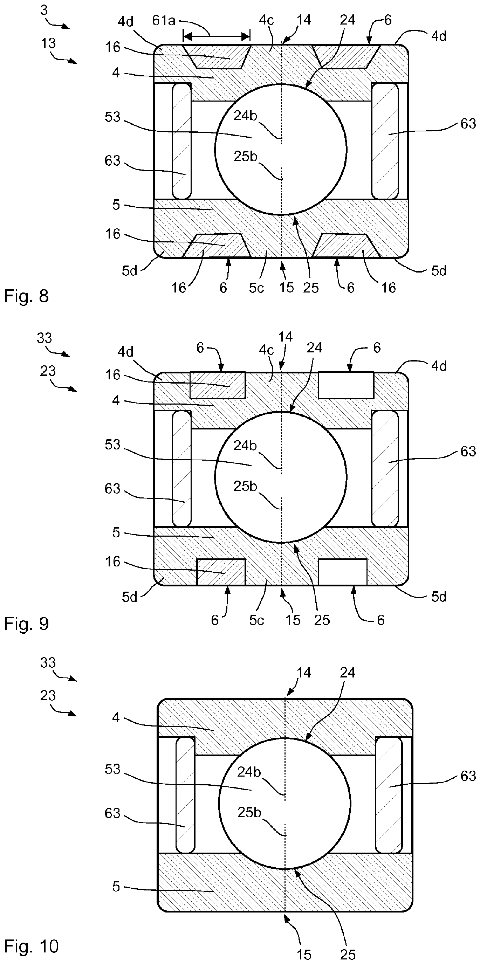

Die Figur 8 zeigt eine Lagereinheit 3 mit komplex ausgeformten Aussparungen 6 an Innenring 5 und Außenring 4. Die Aussparung 6 ist nicht in einem zentralen Abschnitt der Lagerringe 4, 5 angeordnet. Die Ausnehmungen 6 wurden hier mit Ausgleichselementen 16 bis zum Erreichen des gewünschten Passmaßes ergänzt. Die Ausgleichselemente 16 weisen eine vieleckige Querschnittsfläche auf. Zudem kann die Querschnittsfläche auch kurvenförmige Bereiche umfassen. Auch in dem Ausführungsbeispiel nach Fig. 8 kann wenigstens ein Ausgleichselement 16 wenigstens einen Hohlraum umfassen.

Die Aussparungen 6 können sowohl gerade als auch kurvenförmige Abschnitte aufweisen. Dabei ist ein kurvenförmiger Abschnitt vorzugsweise an die Kontur der Laufflächen 24, 25 angepasst, sodass im Bereich der Laufflächen 24, 25 kein Material ausgespart wird. Das ist vorteilhaft, da im Bereich der Laufflächen 24, 25 besonders hohe Kräfte auf die Lagerringe 4, 5 wirken. So kann den Lagerringen 4, 5 einerseits entsprechend viel Material für die Gewichtsreduktion entnommen werden und andererseits bleibt genügend Material für eine zuverlässige Stabilität bestehen. Zudem können dadurch Dämpfungseigenschaften der Lagereinheit 3 verbessert werden, sodass das Fahren angenehmer wird und/oder die Lagereinheit 3 geschont wird.

Die Figur 9 zeigt eine Lagereinheit 3 mit jeweils zwei in einem zentralen Abschnitt angeordneten Aussparungen 6 für Innenring 5 und Außenring 4. So verbleibt zwischen den Aussparungen 6 im Bereich der Laufflächen 24, 25 ausreichend Material. In der jeweiligen Mitte 24b bzw. 25b der Laufflächen 24 bzw. 25 verbleibt jeweils ein Tragabschnitt 4c bzw. 5c zur zuverlässigen Abstützung.

Die rechts angeordneten Aussparungen 6 für den Innenring 5 und Außenring 4 sind hier leer ausgebildet. Die mit einer solchen Lagereinheit 3 ausgestattete Nabe 3 weist daher im Bereich der Aussparungen 6 Leerräume bzw. Hohlräume auf. In einer Ausgestaltung können auch die linken Aussparungen 6 leer sein. Auch die in den anderen Figuren gezeigten Ausgestaltungen können mit leeren oder hohlen Aussparungen ausgestattet sein. In Figur 9 sind am rechten und linken Ende der Lagereinheit 3 jeweils Stützstege bzw. Stege 4d und 5d an dem Außenring 4 und dem Innenring 5 ausgebildet, die eine noch bessere seitliche Abstützung gewährleisten. Dadurch stützt sich die Lagereinheit 3 breit ab, weist im zentralen Bereich Tragabschnitte 4c und 5c und dazwischen z. B. Leerräume an den Aussparungen 6 auf, durch die ein erheblicher Gewichtsanteil eingespart werden kann.

Die in den Figuren 5 bis 9 gezeigten Aussparungen 6 können in entsprechenden Weiterbildungen auch ohne Ausgleichselemente 16 ausgestattet sein. Dann bleiben die Aussparungen 6, in denen keine Ausgleichselemente 16 angeordnet sind, vorzugsweise leer. Die schraffierten und mit dem Bezugszeichen 16 angezogenen Bereiche entsprechen in solchen Ausgestaltungen dann den leeren Aussparungen 6.

Die leeren Aussparungen 6 sind vorzugsweise derart angeordnet, dass die Lagereinheit 3 auch ohne Einsetzen eines Ausgleichselements 16 ein gefordertes Passmaß gegenüber dem Lagersitz 31 bzw. der Achse 21 aufweist. Eine solche Ausgestaltung ist beispielsweise in den Figuren 8 und 9 gezeigt.

Die in den Figuren 5 bis 9 gezeigten Ausgleichselemente 16 können auch in beliebiger sinnvoller Kombination und Anzahl an den verschiedenen Lagereinheiten 3 miteinander getauscht werden. Die Aussparungen 6 sind dann an die Kontur bzw. Querschnittsfläche der jeweiligen Ausgleichselemente 16 angepasst, sodass das gewünschte Passmaß erreicht wird.

Insbesondere sind beide Lagerringe 4, 5 mit jeweils wenigstens einer Aussparung 6 und vorzugsweise auch mit jeweils wenigstens einem Ausgleichselement 16 versehen. Es kann aber auch nur einer der beiden Lagerringe 4, 5 mit einer Aussparung oder zwei oder mehr Aussparungen 6 und/oder Ausgleichselementen 16 versehen sein.

Beispielsweise können an einem Randabschnitt eines Lagerrings 4, 5 Ausgleichselemente 16 mit einer viereckigen Querschnittsfläche und an einem gegenüberliegenden Randabschnitt Ausgleichselemente 16 mit einer dreieckigen Querschnittsfläche angeordnet sein.

Die Ausgleichselemente 16 eines Lagerrings 4, 5 können unterschiedlich oder auch gleich ausgebildet sein. Für den Innenring 5 und den Außenring 4 können Ausgleichselemente mit unterschiedlich ausgestalteten Querschnittsflächen oder auch gleichen Querschnittsflächen vorgesehen sein.

Beispielsweise zeigen die Figuren 5 und 6 Lagereinheiten 3, bei denen die Querschnittsflächen der Ausgleichselemente 16 für den Innenring 4 größere Seitenlängen als die Querschnittsflächen der Ausgleichselemente 16 für den Außenring 4 aufweisen.

Die Querschnittsflächen der Ausgleichselemente für Innenring 5 und Außenring 4 können aber auch im Wesentlichen gleiche Seitenlängen aufweisen, wie beispielsweise in Figur 7 gezeigt.

Die erfindungsgemäße Nabenserie 2 kann beispielsweise an den Fahrrädern 200 der Figuren 1 und 2 eingesetzt werden. Dazu können die Fahrräder 200 mit einer Nabe 1 eines ersten Nabentyps 12 oder einer Nabe 10 eines zweiten Nabentyps 22 der Nabenserie 2 ausgestattet werden. Die Nabentypen 12, 22 unterscheiden sich dabei in ihren Lagereinheiten 3, 33.

Die in der Figur 3 gezeigte Nabe 1 stellt einen ersten Nabentyp 12 der Nabenserie 2 dar. Dieser Nabentyp 12 weist hier Lagereinheiten 3 eines ersten Lagertyps 13 auf, der z. B. in Figur 6 abgebildet ist. Dieser erste Lagertyp 13 umfasst die für die erfindungsgemäße Nabe 1 beschriebenen Lagereinheiten 3. Dieser Lagertyp 13 wird mit Bezug zu den Figuren 5 bis 9 näher beschrieben.

Es kann auch vorgesehen sein, dass die Nabe 1 sowohl Lagereinheiten 3 des ersten Lagertyps 13 als auch Lagereinheiten 33 des zweiten Lagertyps 23 aufweist. Beispielsweise können nur die Lagereinheiten 3 zur Lagerung der Nabenhülse 41 dem ersten Lagertyp 13 entsprechen. Die anderen Lagereinheiten 33 zur Lagerung des Rotors 108 können dann beispielsweise dem zweiten Lagertyp 23 entsprechen.

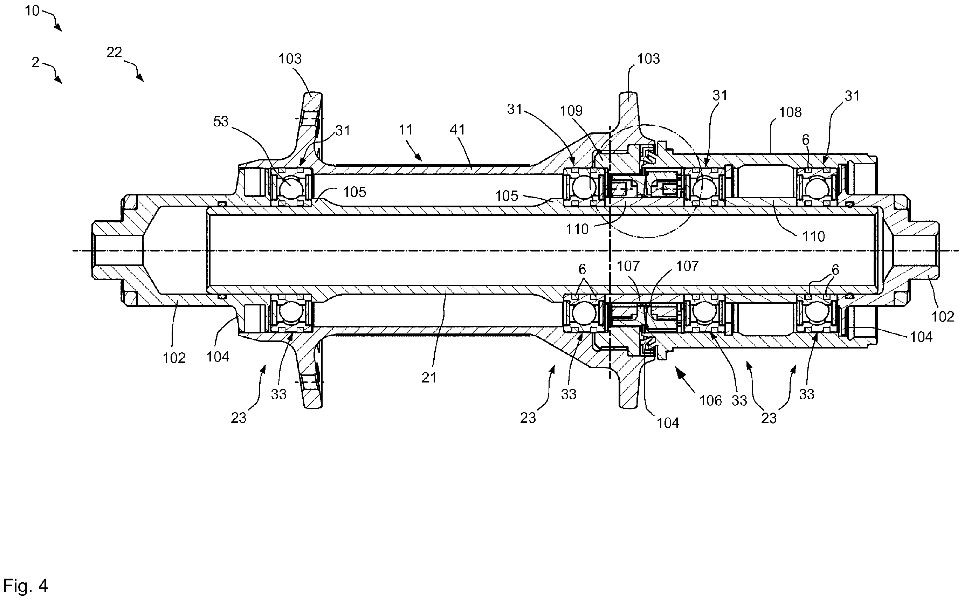

Die Figur 4 zeigt eine Nabe 10 des zweiten Nabentyps 22 der Nabenserie 2 mit einer Lagereinheit 33 eines zweiten Lagertyps 23, der z. B. in Fig. 8 näher dargestellt ist. Möglich ist es aber auch, eine Lagereinheit 33 einzusetzen, welche in der Figur 10 gezeigt ist und welche einen anderen zweiten Lagertyp 23 oder z. B. einen dritten Lagertyp darstellt. Die Nabenserie kann viele Naben umfassen, die sich insbesondere nur oder im Wesentlichen nur durch die eingesetzten (austauschbaren) Lagereinheit bzw. Lagertypen unterscheidet.

Grundsätzlich zeigen die Figuren 5 bis 10 jeweils eigenständige Lagertypen, die alle die gleichen Einbaumaße und Passmaße aufweisen und somit untereinander austauschbar sind.

Die Figur 10 zeigt eine Lagereinheit 33, welche dem zweiten oder einem weiteren Lagertyp 23 angehört und die gleichen Passmaße wie die in den Figuren 5-9 dargestellten Lagereinheiten 3 des ersten Lagertyps 13 aufweist. Die hier gezeigte Lagereinheit 33 weist insbesondere genormte Passmaße auf.

Die Lagereinheit 33 in Fig. 10 hat jedoch keine Aussparungen 6 im Bereich der Aufnahmeflächen 14, 15 des Außenrings 4 oder des Innenrings 5 auf. Somit bringt diese Lagereinheit 33 ein wesentlich höheres Gewicht als die zuvor vorgestellten Lagereinheiten 3 des ersten Lagertyps 13 auf.

Die in der Figur 4 gezeigte Nabe 10 ist mit Ausnahme der Lagereinheiten 33 baugleich mit der in der Figur 3 gezeigten Nabe 1. In Figur 4 sind Lagereinheiten aus Figur 9 abgebildet. Genauso ist aber auch der Einsatz von Lagereinheiten aus den Figuren 6, 7, 8 und insbesondere auch Figur 10 möglich, da alle Lagereinheiten der Figuren 5 bis 10 die gleichen Einbaumaße aufweisen.

Die Lagereinheiten 3, 33 weisen dabei gleiche Passmaße auf. Entsprechend sind die Aufnahmen für die Lagereinheiten 3, 33 in den Naben 1, 10 gleich ausgebildet. Somit können die Lagereinheiten 3, 33 zwischen den beiden Naben 1, 10 der beiden Nabentypen 12, 22 der Nabenserie 2 ausgetauscht werden.

Dazu sind die Lagereinheiten 3, 33 vorzugsweise werkzeuglos austauschbar vorgesehen. Besonders bevorzugt sind auch die hier gezeigten Naben 1, 10 werkzeuglos zerlegbar. Beispielsweise können dazu die Adapterringe 102 von der Achse 21 abgezogen werden. Anschließend kann der Rotor 108 von der Nabenhülse 41 durch Abziehen getrennt werden. Anschließend kann die Achse 21 aus der Nabenhülse 41 gezogen werden. Nun sind alle Lagereinheiten 3, 33 zugänglich und können ausgetauscht werden.

Die Lagereinheiten 3, 33 der zwei oder mehr Lagertypen 13, 23 unterscheiden sich hier in wenigstens einer wesentlichen Lagereigenschaft und weisen dabei gleiche Passmaße auf. So können die Lagereinheiten 3, 33 innerhalb der Nabenserie 2 beliebig ausgetauscht werden, um die Naben 1, 10 mit den jeweils geforderten bzw. gewünschten Lagereigenschaften auszustatten.

Beispielsweise weisen die Lagereinheiten 3 des ersten Lagertyps 13 aufgrund der Aussparungen und der Ausgleichselemente 16 ein erheblich geringeres Gewicht trotz gleicher Abmessungen auf. Da die Lagereinheiten 3, 33 üblicherweise einen großen Anteil am Gesamtgewicht der Nabe 1, 10 haben, kann durch den Austausch das Gewicht der Nabe vorteilhaft beeinflusst werden.

So kann beispielsweise ein Einsteiger zunächst mit einer kostengünstigen Nabe 10 des zweiten Nabentyps 22 mit Lagereinheiten aus Figur 10 beginnen. Später kann er die Nabe 10 durch eine Nabe 1 des ersten Nabentyps 12 ersetzen. Dazu kann er beispielsweise die Lagereinheit 33 des zweiten Lagertyps 23 gegen eine Lagereinheit 3 des ersten Lagertyps 13 austauschen. Das ermöglicht eine besonders kostengünstige und unaufwendige Gewichtsoptimierung der Nabe 1, 10.

Bei der Herstellung wird beispielsweise eine Lagereinheit 3 mit einem genormten Passmaß mit wenigstens einer Aussparung 6 in den Lagerringen 4, 5 ausgestattet. Die Aussparung 6 wird dann mit wenigstens einem Ausgleichselement 16 aus einem leichteren Material als das des Lagerrings 4, 5 wieder auf die genormten Passmaß gebracht. So kann die Lagereinheit 3 wieder als ein Normteil verwendet werden und bietet zugleich eine erhebliche Gewichtseinsparung gegenüber herkömmlichen Lagern.

**Bezugszeichenliste:**

| | | | |
|---|---|---|---|
| 1 | Nabe | 33 | Lagereinheit |
| 2 | Nabenserie | 41 | Nabenhülse |
| 3 | Lagereinheit | 53 | Wälzkörper |
| 3a | Lagerbreite | 61 | linke Aussparung |
| 4 | Lagerring, Außenring | 61a | Breite |
| 4a | Breite | 61b | Fläche |
| 4b | Querschnittsfläche | 62 | rechte Aussparung |
| 4c | Tragabschnitt | 62a | Breite |
| 4d | Steg | 62b | Fläche |
| 5 | Lagerring, Innenring | 63 | Dichtelement |
| 5a | Breite | 64 | äußere Aussparung |
| 5b | Querschnittsfläche | 65 | innere Aussparung |
| 5c | Tragabschnitt | 102 | Adapterring |
| 5d | Steg6 Aussparung | 103 | Speichenflansch |
| 6a | Breite | 104 | Dichtung |
| 6b | Fläche | 105 | Absatz |
| 10 | Nabe | 106 | Freilaufeinrichtung |
| 11 | Nabengehäuse | 107 | Zahnscheibe |
| 12 | erster Nabentyp | 108 | Rotor |
| 13 | erster Lagertyp | 109 | Gewindering |
| 14 | Aufnahmefläche | 110 | Distanzhülse |
| 15 | Aufnahmefläche | 200 | Fahrrad |
| 16 | Ausgleichselement | 201 | Laufrad |
| 16a | Trennlinie | 202 | Felge |
| 17 | Keramikring | 203 | Sattel |
| 21 | Achse | 204 | Rahmen |
| 22 | zweiter Nabentyp | 205 | Lenker |
| 23 | zweiter Lagertyp | 206 | Gabel |
| 24 | Lauffläche | 207 | Federgabel |
| 24a | Breite | 208 | Dämpfer |
| 24b | Mitte der Lauffläche, Flucht | 209 | Pedalantrieb |
| 25 | Lauffläche | | |
| 25a | Breite | | |
| 25b | Mitte der Lauffläche, Flucht | | |
| 31 | Lagersitz | | |

## Patentansprüche

1. Nabe (1) für wenigstens teilweise muskelbetriebene Fahrräder (200) mit einem Nabengehäuse (11) und mit wenigstens einer Lagereinheit (3) zur drehbaren Lagerung des Nabengehäuses (11) gegenüber einer Achse (21), wobei die Lagereinheit (3) wenigstens zwei Lagerringe (4, 5) mit jeweils wenigstens einer Aufnahmefläche (14, 15) und mit jeweils wenigstens einer Lauffläche (24, 25) umfasst, wobei ein als Außenring (4) ausgebildeter Lagerring (4) mit seiner Aufnahmefläche (14) zu wenigstens einem Lagersitz (31) des Nabengehäuses (11) ausgerichtet ist und wobei ein als Innenring (5) ausgebildeter Lagerring (5) mit seiner Aufnahmefläche (15) zur Achse (21) ausgerichtet ist und wobei zwischen den Laufflächen (24, 25) der Lagerringe (4, 5) sich auf diesen abwälzende Wälzkörper (53) angeordnet sind, wobei wenigstens ein Lagerring (4, 5) eine Aussparung (6) an seiner Aufnahmefläche (14, 15) aufweist,
sodass der Lagerring (4, 5) im Bereich der Aussparung (6) radial beabstandet gegenüber dem Lagersitz (31) und/oder der Achse (21) angeordnet ist, sodass eine Gewichtsreduktion des Lagerrings (4, 5) bei im Wesentlichen gleichen Passmaßen der Lagereinheit (3) erreicht wird, wobei die Aussparung (6) axial beabstandet von einer Mitte (24b, 25b) der Lauffläche (24, 25) angeordnet ist,
und/oder die Aussparung (6) den Bereich der Mitte (24b, 25b) der Lauffläche (24, 25) umfasst, **dadurch gekennzeichnet, dass** wenigstens in einem Bereich der Lauffläche (24, 25) in der Aussparung (6) wenigstens ein Ausgleichselement (16) angeordnet ist, welches die ausgesparte Aufnahmefläche (14, 15) des Lagerrings (4, 5) passend gegenüber dem Lagersitz (31) und/oder der Achse (21) ergänzt und welches Ausgleichselement (16) aus einem so harten oder härteren Material wie das Material des Lagerrings (4, 5) besteht und dass eine Summe aller Flächen (6b) aller Aussparungen (6) in einem Lagerring (4, 5) wenigstens ein 1/10 einer Querschnittsfläche (4b, 5b) des Lagerrings (4, 5) beträgt.

2. Nabe (1) nach dem vorhergehenden Anspruch, wobei die in einem Lagerring (4, 5) ausgebildete Aussparung (6) axial vollständig außerhalb der Lauffläche (24, 25) des Lagerrings (4, 5) angeordnet ist.

3. Nabe (1) nach einem der vorhergehenden Ansprüche, wobei sich die Aussparung (6) über wenigstens 1/10 oder wenigstens 1/6 einer Breite (24a, 25a) des Lagerrings (4, 5) erstreckt.

4. Nabe (1) nach einem der vorhergehenden Ansprüche, wobei eine Summe aller Flächen (6b) aller Aussparungen (6) in einem Lagerring (4, 5) wenigstens 1/5 einer Querschnittsfläche (4b, 5b) des Lagerrings (4, 5) beträgt.

5. Nabe (1) nach einem der vorhergehenden Ansprüche, wobei in der axialen Mitte (24b, 25b) der Lauffläche (24, 25) ein Tragabschnitt (4c, 5c) in dem Laufring (4, 5) ausgebildet, an den sich beidseits jeweils eine Aussparung (6) anschließt.

6. Nabe (1) nach dem vorhergehenden Anspruch, wobei der Tragabschnitt (4c, 5c) einstückig mit dem Lagerring (4,5) ausgebildet ist oder durch ein Ausgleichselement (16) aus einem so harten Material wie das Material des Lagerrings (4, 5) gebildet wird.

7. Nabe (1) nach dem vorhergehenden Anspruch, wobei in wenigstens einem axial äußeren Bereich des Lagerrings (4, 5) ein Steg (4d, 5d) zum Abstützen ausgebildet ist.

8. Nabe (1) nach einem der vorhergehenden Ansprüche, wobei im Bereich der Aussparung (6) wenigstens ein Ausgleichselement (16) aus einem leichteren Material als das Material des Lagerrings (4, 5) angeordnet ist, welches die ausgesparte Aufnahmefläche (14, 15) passend gegenüber dem Lagersitz (31) und/oder der Achse (21) ergänzt.

9. Nabe (1) nach einem der vorhergehenden Ansprüche, wobei das Ausgleichselement (16) vor der Montage der Nabe (1) gegenüber dem Lagersitz (31) und/oder der Achse (21) wenigstens ein Übermaß aufweist und wobei das Ausgleichselement (16) dazu geeignet und ausgebildet ist, sich im montierten Zustand der Nabe (1) an ein Passmaß des Lagersitzes (31) und/oder der Achse (21) anzupassen.

10. Nabe (1) nach einem der vorhergehenden Ansprüche, wobei die Aussparung (6) an wenigstens einem Randabschnitt des Lagerrings (4, 5) angeordnet ist.

11. Nabe (1) nach einem der vorhergehenden Ansprüche, wobei der Lagerring (4, 5) einteilig und insbesondere aus einem Stahlmaterial bestehend ausgebildet ist.

12. Nabe (1) nach einem der vorhergehenden Ansprüche, wobei die oder wenigstens eine Aussparung (6) leer ist.

13. Nabenserie (2) mit wenigstens zwei unterschiedlichen Nabentypen (12, 22) für wenigstens teilweise muskelbetriebene Fahrräder (200), umfassend wenigstens einen ersten Nabentyp (12) und wenigstens einen sich davon unterscheidenden zweiten Nabentyp (22), wobei wenigstens einer der Nabentypen Naben nach einem der vorherigen Ansprüche umfasst,
wobei jede Nabe (1, 10) jedes Nabentyps (12, 22) ein Nabengehäuse (11) und wenigstens einen Lagersitz (31) und wenigstens eine an dem Lagersitz (31) austauschbar aufgenommene Lagereinheit (3, 33) zur drehbaren Lagerung des Nabengehäuses (11) gegenüber einer Achse (21) umfasst und wobei der erste Nabentyp (12) eine Lagereinheit (3) eines ersten Lagertyps (13) und der zweite Nabentyp (22) eine Lagereinheit (33) eines zweiten Lagertyps (23) aufweist, **dadurch gekennzeichnet,**
**dass** eine Lagereinheit (3) des ersten Lagertyps (13) und eine Lagereinheit (33) des zweiten Lagertyps (23) im Wesentlichen gleiche Passmaße aufweisen und sich in wenigstens einer wesentlichen Lagereigenschaft wie z. B. Gewicht, Toleranz oder Abdichtung unterscheiden.

14. Nabenserie (2) nach dem vorhergehenden Anspruch, wobei eine Lagereinheit (3) des ersten Lagertyps (13) ein geringeres Gewicht aufweist als eine Lagereinheit (33) des zweiten Lagertyps (23).

15. Nabenserie (2) nach einem der vorhergehenden Ansprüche, wobei die Lagereinheiten (3, 33) des ersten und des zweiten Lagertyps (13, 23) gleiche Passmaße aufweisen und sich hinsichtlich des inneren Aufbaus und/oder der verwendeten Materialien unterscheiden.

## Claims

1. Hub (1) for at least partially muscle-powered bicycles (200) with a hub shell (11) and with at least one bearing unit (3) to rotatably support the hub shell (11) relative to an axle (21), wherein the bearing unit (3) comprises at least two bearing rings (4, 5) with at least one take-up surface (14, 15) each and at least one raceway (24, 25) each, wherein a bearing ring (4) configured as an outer ring (4) is oriented with its take-up surface (14) to at least one bearing seat (31) of the hub shell (11), and wherein a bearing ring (5) configured as an inner ring (5) is oriented with its take-up surface (15) to the axle (21), and wherein rolling members (53) are disposed for rolling off between the raceways (24, 25) of the bearing rings (4, 5), wherein at least one bearing ring (4, 5) comprises a cut-out (6) on its take-up surface (14, 15),
so that the bearing ring (4, 5) is disposed in the region of the cut-out (6) radially spaced apart from the bearing seat (31) and/or the axle (21), so that a weight reduction of the bearing ring (4, 5) is obtained while substantially maintaining the size of fit of the bearing unit (3), wherein the cut-out (6) is disposed axially spaced apart from a center (24b, 25b) of the raceway (24, 25), and/or the cut-out (6) includes the area of the center (24b, 25b) of the raceway (24, 25),
**characterized in that** at least one balancing member (16) is disposed in the cut-out (6) at least in a region of the raceway (24, 25) which member complements the cut out take-up surface (14, 15) of the bearing ring (4, 5) fittingly relative to the bearing seat (31) and/or the axle (21) and which balancing member (16) consists of a material that is as hard as or harder than the material of the bearing ring (4, 5) and that the sum of all the surfaces (6b) of all the cut-outs (6) in a bearing ring (4, 5) amounts to at least 1/10 of the cross-sectional area (4b, 5b) of the bearing ring (4, 5).

2. The hub (1) according to the preceding claim, wherein the cut-out (6) configured in a bearing ring (4, 5) is disposed axially entirely outwardly of the raceway (24, 25) of the bearing ring (4, 5).

3. The hub (1) according to any of the preceding claims, wherein the cut-out (6) extends over at least 1/10 or at least 1/6 of the width (24a, 25a) of the bearing ring (4, 5).

4. The hub (1) according to any of the preceding claims, wherein the sum of all the surfaces (6b) of all the cut-outs (6) in a bearing ring (4, 5) amounts to at least 1/10 or at least 1/5 of the cross-sectional area (4b, 5b) of the bearing ring (4, 5).

5. The hub (1) according to any of the preceding claims, wherein a supporting section (4c, 5c) is configured in the axial center (24b, 25b) of the raceway (24, 25) in the bearing ring (4, 5) where one cut-out (6) each follows on both sides.

6. The hub (1) according to the preceding claim, wherein the supporting section (4c, 5c) is integrally formed with the bearing ring (4, 5) or is formed by a balancing member (16) of a material that is as hard as the material of the bearing ring (4, 5) .

7. The hub (1) according to the preceding claim, wherein a stem (4d, 5d) is configured as a support in at least one axially outwardly region of the bearing ring (4, 5).

8. The hub (1) according to any of the preceding claims, wherein at least one balancing member (16) is disposed in the region of the cut-out (6) consisting of a material that is more lightweight than the material of the bearing ring (4, 5), which complements the cut out take-up surface (14, 15) fittingly relative to the bearing seat (31) and/or the axle (21).

9. The hub (1) according to any of the preceding claims, wherein prior to mounting the hub (1), the balancing member (16) shows at least one oversize dimension relative to the bearing seat (31) and/or the axle (21), and wherein the balancing member (16) is suitable and configured to adapt to a size of fit of the bearing seat (31) and/or the axle (21) in the mounted state of the hub (1).

10. The hub (1) according to any of the preceding claims, wherein the cut-out (6) is disposed on at least one edge section of the bearing ring (4, 5).

11. The hub (1) according to any of the preceding claims, wherein the bearing ring (4, 5) is formed integrally and in particular of a steel material.

12. The hub (1) according to any of the preceding claims, wherein the or at least one cut-out (6) is empty.

13. Hub series (2) comprising at least two different hub types (12, 22) for at least partially muscle-powered bicycles (200), comprising at least one first hub type (12) and at least one second, differing hub type (22), at least one of the hub types comprising hubs according to any of the preceding claims, wherein each hub (1, 10) of each hub type (12, 22) comprises a hub shell (11) and at least one bearing seat (31) and at least one bearing unit (3, 33) exchangeably accommodated on the bearing seat (31) to rotatably support the hub shell (11) relative to an axle (21), and wherein the first hub type (12) comprises a bearing unit (3) of a first bearing type (13) and the second hub type (22) comprises a bearing unit (33) of a second bearing type (23),
**characterized in**
**that** a bearing unit (3) of the first bearing type (13) and a bearing unit (33) of the second bearing type (23) substantially show the same size of fit and differ in at least one substantial bearing property such as weight, tolerance, or seal.

14. The hub series (2) according to the preceding claim, wherein a bearing unit (3) of the first bearing type (13) has a lower weight than a bearing unit (33) of the second bearing type (23).

15. The hub series (2) according to any of the preceding claims, wherein the bearing units (3, 33) of the first and second bearing types (13, 23) show the same size of fit and differ in their inner structure and/or the materials employed.

## Revendications

1. Moyeu (1) pour des bicyclettes (200) entraînées au moins en partie par force musculaire, comprenant un boîtier de moyeu (11) et au moins une unité de palier (3) pour supporter en rotation le boîtier de moyeu (11) par rapport à un axe (21), dans lequel l'unité de palier (3) comprend au moins deux bagues de support (4, 5) ayant chacune au moins une surface de réception (14, 15) et ayant chacune au moins une surface de roulement (24, 25), dans lequel la surface de réception (14) d'une bague de support (4) conçue en tant que bague extérieure (4) est orientée vers au moins un siège de support (31) du boîtier de moyeu (11) et dans lequel la surface de réception (15) d'une bague de support (5) conçue en tant que bague intérieure (5) est orientée vers l'axe (21) et dans lequel des corps roulants (53) sont disposés entre les surfaces de roulement (24, 25) des bagues de support (4, 5) et roulent sur celles-ci,
dans lequel au moins une bague de support (4, 5) présente un évidement (6) sur sa surface de réception (14, 15),
de sorte que la bague de support (4, 5) est disposée, au niveau de l'évidement (6), de manière à être radialement espacée par rapport au siège de support (31) et/ou à l'axe (21) de sorte que l'on parvient à une réduction du poids de la bague de support (4, 5) tout en ayant pour l'essentiel les mêmes dimensions d'ajustage de l'unité de palier (3),
dans lequel l'évidement (6) est disposé de manière à être espacé axialement d'un centre (24b, 25b) de la surface de roulement (24, 25),
et/ou
l'évidement (6) comprend la zone du centre (24b, 25b) de la surface de roulement (24, 25), **caractérisé par le fait que**, au moins dans une zone de la surface de roulement (24, 25), au moins un élément de compensation (16) est disposé dans l'évidement (6), qui complète de manière appropriée la surface de réception (14, 15) évidée de la bague de support (4, 5) par rapport au siège de support (31) et/ou à l'axe (21), et lequel élément de compensation (16) est constitué d'un matériau qui est aussi dur ou plus dur que le matériau de la bague de support (4, 5) et qu'une somme de toutes les surfaces (6b) de tous les évidements (6) dans une bague de support (4, 5) fait au moins 1/10 d'une aire de la section (4b, 5b) de la bague de support (4, 5).

2. Moyeu (1) selon la revendication précédente, dans lequel l'évidement (6) formé dans une bague de support (4, 5) est disposé axialement complètement à l'extérieur de la surface de roulement (24, 25) de la bague de support (4, 5).

3. Moyeu (1) selon l'une quelconque des revendications précédentes, dans lequel l'évidement (6) s'étend sur au moins 1/10 ou au moins 1/6 d'une largeur (24a, 25a) de la bague de support (4, 5).

4. Moyeu (1) selon l'une quelconque des revendications précédentes, dans lequel une somme de toutes les surfaces (6b) de tous les évidements (6) dans une bague de support (4, 5) fait au moins 1/5 d'une aire de la section (4b, 5b) de la bague de support (4, 5).

5. Moyeu (1) selon l'une quelconque des revendications précédentes, dans lequel, au centre axial (24b, 25b) de la surface de roulement (24, 25), une portion porteuse (4c, 5c) est réalisée dans la bague de support (4, 5), qui est suivie de part et d'autre d'un évidement (6).

6. Moyeu (1) selon la revendication précédente, dans lequel ladite portion porteuse (4c, 5c) est formée d'un seul tenant avec la bague de support (4,5) ou est formée par un élément de compensation (16) fait à partir d'un matériau qui est aussi dur que le matériau de la bague de support (4, 5).

7. Moyeu (1) selon la revendication précédente, dans lequel une entretoise (4d, 5d) destinée à appuyer est formée dans au moins une zone axialement extérieure de la bague de support (4, 5).

8. Moyeu (1) selon l'une quelconque des revendications précédentes, dans lequel au moins un élément de compensation (16) fait à partir d'un matériau qui est plus léger que le matériau de la bague de support (4, 5) est disposé au niveau de l'évidement (6), celui-ci complète de manière appropriée la surface de réception (14, 15) évidée par rapport au siège de support (31) et/ou à l'axe (21).

9. Moyeu (1) selon l'une quelconque des revendications précédentes, dans lequel l'élément de compensation (16) présente au moins une surmesure par rapport au siège de support (31) et/ou à l'axe (21) avant le montage du moyeu (1), et dans lequel l'élément de compensation (16) est adapté et conçu pour s'adapter, à l'état monté du moyeu (1), à une dimension d'ajustage du siège de support (31) et/ou de l'axe (21).

10. Moyeu (1) selon l'une quelconque des revendications précédentes, dans lequel l'évidement (6) est disposé sur au moins une portion de bord de la bague de support (4, 5).

11. Moyeu (1) selon l'une quelconque des revendications précédentes, dans lequel la bague de support (4, 5) est formée d'une seule pièce et en particulier en se composant d'un matériau en acier.

12. Moyeu (1) selon l'une quelconque des revendications précédentes, dans lequel ledit ou au moins un évidement (6) est vide.

13. Série de moyeux (2) comprenant au moins deux types différents de moyeux (12, 22) pour des bicyclettes (200) entraînées au moins en partie par force musculaire, comprenant au moins un premier type de moyeu (12) et au moins un deuxième type de moyeu (22) qui en est différent, dans lequel l'un au moins des types de moyeu comprend des moyeux selon l'une quelconque des revendications précédentes,
dans lequel chaque moyeu (1, 10) de chaque type de moyeu (12, 22) comprend un boîtier de moyeu (11) et au moins un siège de support (31) et au moins une unité de palier (3, 33) destinée à supporter en rotation le boîtier de moyeu (11) par rapport à un axe (21) et reçue de manière échangeable sur le siège de support (31), et dans lequel le premier type de moyeu (12) présente une unité de palier (3) d'un premier type de palier (13) et le deuxième type de moyeu (22) présente une unité de palier (33) d'un deuxième type de palier (23), **caractérisée par le fait**
**qu'**une unité de palier (3) du premier type de palier (13) et une unité de palier (33) du deuxième type de palier (23) présentent pour l'essentiel les mêmes dimensions d'ajustage et se distinguent l'une de l'autre par au moins une propriété de palier essentielle telle que, par exemple, le poids, la tolérance ou l'étanchéité.

14. Série de moyeux (2) selon la revendication précédente, dans laquelle une unité de palier (3) du premier type de palier (13) présente un poids inférieur à celui d'une unité de palier (33) du deuxième type de palier (23).

15. Série de moyeux (2) selon l'une quelconque des revendications précédentes, dans laquelle les unités de palier (3, 33) des premier et deuxième types de palier (13, 23) présentent les mêmes dimensions d'ajustage et se distinguent l'une de l'autre quant à la structure intérieure et/ou aux matériaux utilisés.
